(19) Europäisches Patentamt
European Patent Office
Office européen des brevets

(11) EP 3 868 817 B1

(12) EUROPÄISCHE PATENTSCHRIFT

(45) Veröffentlichungstag und Bekanntmachung des Hinweises auf die Patenterteilung:
**25.03.2026 Patentblatt 2026/13**

(21) Anmeldenummer: **21151730.5**

(22) Anmeldetag: **15.01.2021**

(51) Internationale Patentklassifikation (IPC):
***C08K 3/013*** *(2018.01)* ***C08K 3/016*** *(2018.01)*
***C08K 3/22*** *(2006.01)* ***C08K 3/34*** *(2006.01)*
***C08K 5/00*** *(2006.01)* ***C08K 7/14*** *(2006.01)*
***C08K 7/20*** *(2006.01)* ***C08K 7/28*** *(2006.01)*
***C09C 1/62*** *(2006.01)* ***H01B 3/30*** *(2006.01)*
***B23K 26/00*** *(2014.01)* ***B23K 37/00*** *(2025.01)*
***B41M 5/26*** *(2006.01)* ***C09C 1/00*** *(2006.01)*
*C08K 3/32 (2006.01)* *C08K 5/17 (2006.01)*

(52) Gemeinsame Patentklassifikation (CPC):
(C-Sets verfügbar)
**C09C 1/0081; B23K 37/00; B41M 5/267; C08K 3/013; C08K 3/016; C08K 3/22; C08K 3/34; C08K 5/0016; C08K 5/005; C08K 7/14; C08K 7/20; C08K 7/28; C09C 1/0084; C09C 1/62; H01B 3/305;**
(Forts.)

(54) **HOCHVOLTKOMPONENTEN**

HIGH VOLUME COMPONENTS

COMPOSANTS À HAUT VOLTAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2020 EP 20158219**

(43) Veröffentlichungstag der Anmeldung:
**25.08.2021 Patentblatt 2021/34**

(73) Patentinhaber: **Envalior Deutschland GmbH**
**40474 Düsseldorf (DE)**

(72) Erfinder:
- **ENDTNER, Jochen**
  **40474 DÜSSELDORF (DE)**
- **SCHMITZ, Dirk**
  **40474 DÜSSELDORF (DE)**
- **BIENMÜLLER, Matthias**
  **40474 DÜSSELDORF (DE)**

(74) Vertreter: **Envalior Association**
**Urmonderbaan 22**
**6167 RD Geleen (NL)**

(56) Entgegenhaltungen:
**KR-B1- 101 977 321**

- **ANONYMOUS: "A New Class of Weather-Fast Pigments", 1 April 2005 (2005-04-01), XP055713953, Retrieved from the Internet <URL:https://www.pcimag.com/articles/83054-a-new-class-of-weather-fast-pigments> [retrieved on 20200713]**
- **"New Colour Index for BASF orange pigment", ADDITIVES FOR POLYMERS, ELSEVIER ADVANCED TECHNOLOGY, GB, vol. 2009, no. 4, 1 April 2009 (2009-04-01), pages 3 - 4, XP026090398, ISSN: 0306-3747, [retrieved on 20090401], DOI: 10.1016/S0306-3747(09)70024-7**

EP 3 868 817 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
C08K 3/32; C08K 5/17; C08K 2003/2241;
C08K 2003/2296

C-Sets
**C08K 3/013, C08L 77/00;**
**C08K 3/016, C08L 77/00;**
**C08K 3/22, C08L 77/00;**
**C08K 3/34, C08L 77/00;**
**C08K 5/0016, C08L 77/00;**
**C08K 5/005, C08L 77/00;**
**C08K 7/14, C08L 77/00;**
**C08K 7/20, C08L 77/00;**
**C08K 7/28, C08L 77/00**

## Beschreibung

Die vorliegende Erfindung betrifft die Verwendung eines Pigmentsystems auf Basis anorganischer Mischoxide enthaltend Titandioxid, Zinnoxid und Zinkoxide als Laserbeschriftungsadditiv Polyamid basierter Hochvoltkomponenten.

## Stand der Technik

Technische Thermoplaste wie Polyamide sind aufgrund ihrer guten mechanischen Stabilität, ihrer chemischen Beständigkeit, den sehr guten elektrischen Eigenschaften und der guten Verarbeitbarkeit gerade auch im Bereich von Bauteilen für Kraftfahrzeuge ein wichtiger Werkstoff.

Polyamide bilden seit vielen Jahren einen wichtigen Bestandteil zur Fertigung anspruchsvoller Kraftfahrzeugkomponenten. Während über viele Jahre der Verbrennungsmotor das dominierende Antriebskonzept darstellte, ergeben sich im Zuge der Suche nach alternativen Antriebskonzepten auch neue Anforderungen hinsichtlich der Materialauswahl. Eine wesentliche Rolle spielt dabei die Elektromobilität, bei welcher der Verbrennungsmotor in Hybrid-Fahrzeugen teilweise, insbesondere in HEV = Hybridfahrzeugen, PHEV= Plug-In-Hybrid-Fahrzeugen, BEV Rex = Fahrzeuge mit Elektromotor sowie mit kleinem Verbrennungsmotor als Range Extender, oder in Elektromobilen vollständig, vorzugsweise in BEV= reine Elektromotorfahrzeugen oder FCEV= Brennstoffzellenfahrzeugen, durch einen oder mehrere Elektromotoren ersetzt wird, die ihre elektrische Energie typischerweise aus Batterien oder Brennstoffzellen beziehen. Während konventionelle Fahrzeuge mit Verbrennungsmotor als alleinigem Antrieb (ICE [Internal Combustion Engine]) typischerweise mit einem Bordspannungsnetz von 12V auskommen, werden in Hybrid- und Elektrofahrzeugen mit Elektromotoren als Antriebseinheit wesentlich höhere Spannungen benötigt. Dies stellt für den direkten Bereich und die unmittelbare Umgebung von derartig hochspannungsführenden Teilen ein ernstzunehmendes zusätzliches Gefahrenpotential dar, was in technischen Spezifikationen oder auch normativ zunehmend eine Rolle spielt. Eine wichtige Rolle spielt dabei die eindeutige Kennzeichnung dieser Gefährdungsbereiche, um auf diese Weise einen unbeabsichtigten Kontakt mit einem Menschen, insbesondere Fahrer oder Mechaniker usw., zu vermeiden, wobei wiederum die eindeutige farbliche Kennzeichnung von derartigen Hochvoltbaugruppen eine besonders wichtige Rolle spielt.

So hat das Advanced Vehicle Team des Idaho National Laboratory für HEV (Hybrid Electric Vehical) in **https://avt.inl.gov/sites/default/files/pdf/hev/hevtechspecr1.pdf** eine technische Spezifikation veröffentlicht, die für alle Geräte, welche einer Hochspannung größer oder gleich 60V ausgesetzt sind, unter anderem eine klare Kennzeichnung als "HOCHVOLT" empfiehlt und in diesem Zusammenhang auch auf die Farbe Orange als Kennzeichnung hinweist.

Aufgrund der hohen Verarbeitungstemperaturen von teilweise >300°C in der Compoundierung und im Spritzguss ist gerade für technische Thermoplaste wie Polyamide die Auswahl an geeigneten Farbmitteln für die Farbe Orange jedoch sehr eingeschränkt.

EP 0 041 274 B1 beschreibt fluoreszierende Zusammensetzungen mit der Fähigkeit die Wellenlängen des Lichtes zu verändern, Formkörper auf Basis solcher Zusammensetzungen als Lichtwellen umwandelnde Elemente und Vorrichtungen zur Umwandlung von optischer Energie in elektrische Energie unter Verwendung eines solchen Elements. In den Beispielen der EP 0 041 274 B1 wird unter anderem 12H-Phthaloperin-12-on in Polyethylenterephthalat (PET) eingesetzt. Ferner wird in EP 0 041 274 B1 der Einsatz unter anderem in Polyamiden vorgeschlagen.

12H-Phthaloperin-12-on [CAS Nr. 6925-69-5], bekannt als Solvent Orange 60, ist beispielsweise erhältlich als Macrolex® Orange 3G von der Firma Lanxess Deutschland GmbH, Köln. Nachteilig ist aber, dass Solvent Orange 60 bei Extremanforderungen, insbesondere unter den Anforderungen in der Elektromobilität, zu Migration aus der Kunststoffmatrix neigt, was bei erhöhten Temperaturen zu einem Nachlassen der Farbintensität führt. Das Solvent Orange 60 migriert dabei an die Oberfläche des Kunststoffes (blooming). Von dort kann es abgerieben, abgewaschen oder aufgelöst werden, sich verflüchtigen (fogging) oder in andere Werkstoffe, insbesondere benachbarte Kunststoff- oder Kautschukteile, migrieren (Bleeding). Die Konzentration des Solvent Orange 60 reduziert sich im Kunststoff, die Farbintensität lässt nach. Das migrierte Solvent Orange 60 hat zudem den Nachteil, dass es durch mechanische oder physikalische Prozesse zu benachbarten Bauteilen transportiert werden kann und dort zu Funktionsbeeinträchtigungen führt. Beispielsweise sei hier ein erhöhter elektrischer Widerstand in einem Schalterkontakt genannt, der durch Ablagerung von Solvent Orange 60 auf der Oberfläche von elektrischen Kontakten resultieren kann. Im Umfeld elektrischer Bauteile ist daher die Migration von Inhaltsstoffen aus Kunststoffen heraus generell unerwünscht, da sie die Eigenschaften der Kunststoffe sowie räumlich benachbarter Teile beeinflussen kann, wodurch die Funktion des elektrischen Bauteils ggf. nicht mehr gewährleistet ist.

Wichtig für Hochvoltkomponenten, insbesondere Hochvoltkomponenten in der Elektromobilität, ist aber auch die Möglichkeit einer Kennzeichnung um diese mit Zusatzinformationen wie Seriennummern, Herstellermerkmalen, Installationsinformationen oder sicherheitsrelevanten Informationen zu kennzeichnen. Geeignetes Mittel zur Kennzeichnung Kunststoff basierter Bauteile ist die Laserbeschriftung (siehe **https://de.wikipedia.org/wiki/Laserbeschriftung),** wobei bevorzugt ein Festkörperlaser mit Nd:YAG oder Nd:$YVO_4$-Kristall der Wellenlänge 1064nm, 532nm oder 355nm eingesetzt werden, wobei Laser der Wellenlänge 1064nm besonders bevorzugt ist.

Gemäß dem Stand der Technik, werden bei Beschriftungen mit einem Laser der Wellenlänge 1064nm zumeist Antimontrioxid-basierte Additive zur Verbesserung des Beschriftungskontrastes eingesetzt (siehe EP 3 281 974 A1). Allerdings ist der Einsatz von Antimontrioxid erfindungsgemäß vorzugsweise zu vermeiden, da es aufgrund eines H351 Gefahrenhinweises ("Kann vermutlich Krebs erzeugen") im Markt negativ besetzt ist.

Als Maß für die Qualität der **Laserbeschriftbarkeit** erfindungsgemäßer Hochvoltkomponenten gilt im Rahmen der vorliegenden Erfindung der Kontrast einer mit einem Laserstrahl behandelten Fläche im Vergleich zu einer nicht mit dem Laserstrahl behandelten Fläche, wobei die zu untersuchenden Flächen Platten mit den Maßen 60•40•2 $mm^3$ aus den zu untersuchenden Polymerformmassen sind. Für die Beschriftung wird im Rahmen der vorliegenden Erfindung ein Laser, vorzugsweise ein Festkörperlaser mit Nd:YAG Kristall, insbesondere das Laserbeschriftungsgerät DPL-Genesis-Marker(8W) der Firma ACI Laser GmbH, Chemnitz, Deutschland mit der Beschriftungssoftware MagicMarkV3 und dem Fokussierobjektiv F-Theta 163, bei einer Laserwellenlänge von 1064nm verwendet. Zum Vergleich des Kontrastes nach Beschriftung wird im Rahmen der vorliegenden Erfindung eine Schreibgeschwindigkeit ("Speed") von 50mm/s, eine Pulsfrequenz ("Frequency") von 1000Hz und ein Zeilenabstand "(Line spacing)" von 100$\mu$m gewählt, wobei die Pulsweite ("Pulswidth") 3$\mu$s und die Laserleistung ("Power") am Gerät 90% beträgt.

Der Kontrast wird im Rahmen der vorliegenden Erfindung unter Anwendung der Graumaßstabsskala gemäß **ISO 105-A03** wie folgt klassifiziert:

- Klassifizierung ( - ): Die laserbestrahlte Fläche unterscheidet sich von der nicht laserbestrahlten Fläche vergleichbar einem Graumaßstab nach **ISO 105-A03** der Klasse 4, 4/5 oder 5, womit die laserbestrahlte Fläche nicht oder fast nicht von der nicht laserbestrahlten Fläche zu unterscheiden ist.
- Klassifizierung ( + ): Die laserbestrahlte Fläche unterscheidet sich von der nicht laserbestrahlten Fläche vergleichbar einem Graumaßstab nach **ISO 105-A03** der Klassen 1 bis 3/4, womit die laserbestrahlte Fläche gut von der nicht laserbestrahlten Fläche zu unterscheiden ist.

Idealerweise sollen erfindungsgemäße orange Polyamid basierte Hochvoltkomponenten bzw. auch die zu deren Herstellung einzusetzenden Polymerformmassen neben der Laserbeschriftbarkeit gegenüber dem oben zitierten Stand der Technik auch eine verbesserte Lichtechtheit (Lightfastness) und eine verbesserte thermische Stabilität aufweisen, indem die ursprüngliche, unmittelbar nach dem Spritzguss erzielte Farbe unter UV-Licht beziehungsweise unter thermischer Beanspruchung jeweils über einen längeren Zeitraum als im Vergleich zu 12H-Phthaloperin-12-on beibehalten wird. Ein **längerer Zeitraum in Bezug auf die thermische Beanspruchung** bedeutet im Rahmen der vorliegenden Erfindung eine Lagerung im Heißlufttrockenschrank bei 80°C für 12 Stunden. Ein **längerer Zeitraum in Bezug auf die Lichtechtheit** bedeutet im Rahmen der vorliegenden Erfindung eine Bestrahlungszeit mit einer Xenon Lampe, 1500 Watt, 45-130 klx, einer Wellenlänge im Bereich von 300 bis 800 nm über 96h. Im Rahmen der vorliegenden Erfindung gilt als Maß für die Lichtechtheit (Lightfastness) die Verfärbung der zu untersuchenden Formmassen in Form von 60•40•2$mm^3$-Platten nach UV-Lagerung mit einem UV-Licht Suntest CPS+, 300-800nm, 45-130 klx, mit Window Glass Filter 250-765 $W/m^2$ der Fa. Atlas Material Testing Technology GmbH, Linsengericht, Deutschland, über einen Zeitraum von 96h. Die Bewertung der Verfärbung erfolgt anschließend visuell in Anlehnung an den Blaumaßstab (Blue Wool Scale) gemäß **DIN EN ISO 105-B02,** wobei ‚8' für eine hervorragende Lichtechtheit (geringe Farbänderung) und 1' für sehr geringe Lichtechtheit (starke Farbänderung) steht.

**Bleeding**

Zur Ermittlung des Bleeding wird im Rahmen der vorliegenden Erfindung wie folgt verfahren:
Zunächst werden Kunststoffplatten aus einer Farbmittel enthaltenden und zu untersuchenden Polyamid-Zusammensetzung mit den Maßen 60•40•2 $mm^3$ gefertigt. Für Kunststoffplatten im Sinne der vorliegenden Erfindung wird als Farbmittel wenigstens ein Pigmentsystem auf Basis eines anorganischen Mischoxids enthaltend Titandioxid, Zinnoxid und Zinkoxid eingesetzt. Anschließend wird eine Weich-PVC-Folie mit den Maßen 30•20•2 $mm^3$ zwischen zwei der zunächst gefertigten Kunststoffplatten eingespannt und die Gesamtheit aller Platten in einem Heißlufttrockenschrank bei 80°C für 12 Stunden gelagert. Die anschließende Bewertung des aus den zwei Kunststoffplatten ins Weich-PVC migrierten Farbmittels erfolgt danach visuell nach dem Graumaßstab gemäß **ISO 105-A02,** wobei '5' bedeutet, dass die PVC-Folie keine Farbänderung zeigt (kein visuell erkennbarer Farbmittelübergang von den Polyamid-Kunststoffplatten auf die PVC-Folie) und '1' bedeutet, dass das PVC-Folie eine starke Farbveränderung zeigt (starker visuell erkennbarer Farbmittelübergang von den Polyamid-Kunststoffplatten auf die PVC-Folie).

**Lichtechtheit**

Als Maß für die Lichtechtheit (Lightfastness) gilt im Rahmen der vorliegenden Erfindung die Verfärbung nach UV-Lagerung von oben beschriebenen Kunststoffplatten auf Basis der zu untersuchenden und Farbmittel enthaltenden Polyamid-Zusammensetzung mit einem UV-Licht vom Typ Suntest CPS+ mit luftgekühlter Atlas Xenon Lampe, 1500 Watt, 45-130 klx, Wellenlänge 300 - 800 nm und Window Glass Filter 250-267 W/$m^2$ des Herstellers Atlas Material Testing Technology GmbH, Linsengericht, Deutschland, und einer Bestrahlungszeit von 96h. Die Bewertung der Verfärbung erfolgt visuell in Anlehnung an den Blaumaßstab (Blue Wool Scale) gemäß DIN EN ISO 105-B02, wobei ‚8' für eine hervorragende Lichtechtheit (geringe Farbänderung) und '1' für sehr geringe Lichtechtheit (starke Farbänderung) steht.

## Hochvolt

In der Regelung Nr. 100 der Wirtschaftskommission der Vereinten Nationen für Europa (UNECE) - Einheitliche Bedingungen für die Genehmigung von Fahrzeugen hinsichtlich der besonderen Anforderungen an den Elektroantrieb [2015/505] wird im Abschnitt 2.17 der Begriff "Hochspannung" (engl. "High Voltage") als eine Spannung beschrieben, für die ein elektrisches Bauteil oder ein Stromkreis ausgelegt ist, dessen Effektivwert der Betriebsspannung > 60 V und ≤ 1 500 V (Gleichstrom) oder > 30 V und ≤ 1 000 V (Wechselstrom) ist.

Diese Klassifizierung von "Hochspannung" entspricht der Spannungsklasse B der **IS06469-3:2018** ("Electrically propelled road vehicles - Safety specifications - Part 3: Electrical safety"). Dort finden sich in Abschnitt 5.2 auch Kennzeichnungsvorschriften für elektrische Komponenten der Spannungsklasse B durch entsprechende Gefahrensymbole oder die Farbe ‚Orange'.

## Orange

Im Rahmen der vorliegenden Erfindung gilt als Orange eine Farbe, die im RAL Farbsystem nach **https://de.wikipedia.org/wiki/RAL-Farbe#Orange** in der RAL Farbtabelle eine Farbnummer hat, die mit einer "2" beginnt. Im Einzelnen unterscheidet man zum Anmeldetag der vorliegenden Erfindung Orangetöne gemäß **Tab.1:**

**Tab. 1**

| | | L* | a* | b* |
|---|---|---|---|---|
| RAL 2000 | Gelborange | 58,20 | 37,30 | 68,68 |
| RAL 2001 | Rotorange | 49,41 | 39,79 | 35,29 |
| RAL 2002 | Blutorange | 47,74 | 47,87 | 33,73 |
| RAL 2003 | Pastellorange | 66,02 | 41.22 | 52,36 |
| RAL 2004 | Reinorange | 56,89 | 50,34 | 49,81 |
| RAL 2005 | Leuchtorange | 72,27 | 87,78 | 82,31 |
| RAL 2007 | Leuchthellorange | 76,86 | 47,87 | 97,63 |
| RAL 2008 | Hellrotorange | 60,33 | 46,91 | 60,52 |
| RAL 2009 | Verkehrsorange | 55,83 | 47,79 | 48,83 |
| RAL 2010 | Signalorange | 55,39 | 40,10 | 42,42 |
| RAL 2011 | Tieforange | 59,24 | 40,86 | 64,50 |
| RAL 2012 | Lachsorange | 57,75 | 40,28 | 30,66 |
| RAL 2013 | Perlorange | 40,73 | 32,14 | 34,92 |

In Tab. 1 sind die geräteunabhängigen CIE L*a*b* Farbwerte für den jeweiligen RAL Wert angegeben: L* steht für die Luminanz, a* = D65 und b* = 10°. Das Farbmodell ist in der EN ISO 11664-4 "Colorimetry -- Part 4: CIE 1976 L*a*b* Colour space" genormt. Zu L*a*b*-Farbraum (auch: CIELAB) siehe: **https://de.wikipedia.org/wiki/Lab-Farbraum.**

Jede Farbe im Farbraum ist durch einen Farbort mit den kartesischen Koordinaten L*, a*, b* definiert. Die a*b*-Koordinatenebene wurde in Anwendung der Gegenfarbentheorie konstruiert. Auf der a*-Achse liegen sich Grün und Rot gegenüber, die b*-Achse verläuft zwischen Blau und Gelb. Komplementäre Farbtöne stehen sich jeweils um 180° gegenüber, in ihrer Mitte (dem Koordinatenursprung a*=0, b*=0) ist Grau.

Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen.

Die a*-Werte reichen von ca. -170 bis +100, die b*-Werte von -100 bis +150, wobei die Maximalwerte nur bei mittlerer Helligkeit bestimmter Farbtöne erreicht werden. Der CIELAB-Farbkörper hat im mittleren Helligkeitsbereich

seine größte Ausdehnung, die aber je nach Farbbereich unterschiedlich in Höhe und Größe ist.

Im Rahmen der vorliegenden Erfindung sind Polymerzusammensetzungen sowie daraus herzustellende Hochvoltkomponenten bevorzugt, deren Farbwert dem RAL 2003, Pastellorange mit L*a*b* 66,02 / 41.22 / 52,36 möglichst nahe kommt, wenn nicht sogar diesem genau entspricht. Der Fachmann wird zu diesem Zweck die Mengen der in den erfindungsgemäßen Polymerzusammensetzungen einzusetzenden Komponenten so wählen, dass als Resultat möglichst RAL 2003 erzielt wird. EP 0 113 229 A1**,** deren Inhalt von der vorliegenden Anmeldung vollumfänglich umfasst wird, zeigt in Fig. 3 ein Dreieckskoordinatendiagramm, das die Zusammensetzung von Pigmentsystemen, die verschiedene Mengen von Zinnoxid, Zinkoxid und Titandioxid enthalten, mit der wahrgenommenen Farbe des Komplexes korreliert. Deutlich zu erkennen ist darin der Bereich, wo die Farbe als Orange / Gelb wahrgenommen wird.

Erfindungsgemäß umfasst sind orange ähnliche Farbtöne die einen Farbabstand $\Delta E < 30$ zwischen den L*a*b* Koordinaten der Polymerzusammensetzung und den L*a*b* Koordinaten einer mit "2" beginnenden Farbnummer der RAL-Farbtabelle aufweisen, bevorzugt ein $\Delta E < 20$, besonders bevorzugt ein $\Delta E < 12$ und ganz besonders bevorzugt ein $\Delta E < 5$.

Zur Erläuterung des ΔE siehe beispielsweise:

**https://de.wikipedia.org/wiki/Delta_E.**

Das ΔE ist ein Maß für den empfundenen Farbabstand, das möglichst für alle auftretenden Farben "gleichabständig" ist. In **EN ISO 11664-4** wird der Begriff Farbabstand gegenüber dem Begriff Farbdifferenz bevorzugt. Gegenüber Farbunterschied steht Farbabstand für die quantifizierte Form. Jeder real auftretenden Farbe, auch jeder von einem Gerät abgegebenen oder gemessenen Farbe, lässt sich in einem dreidimensionalen Raum ein Farbort zuordnen. Diese Möglichkeit ist im Graßmannschen Gesetz begründet. Der Wert von ΔE zwischen den Farborten $(L^*,a^*,b^*)_p$ und $(L^*,a^*,b^*)_v$ wird nach EN ISO 11664-4 als euklidischer Abstand berechnet:

$$\Delta E_{p,v} = \sqrt{(L_p^* - L_v^*)^2 + (a_p^* - a_v^*)^2 + (b_p^* - b_v^*)^2}$$

Weitere Erläuterungen zu ΔE finden sich in **https://de.wikipedia.org/wiki/Delta_E.**

Zur Klarstellung sei angemerkt, dass vom Rahmen der vorliegenden Erfindung alle aufgeführten allgemeinen oder in Vorzugsbereichen genannten Definitionen und Parameter in beliebigen Kombinationen umfasst sind. Dies betrifft insbesondere auch die einzusetzenden Mengenangaben und Parameter der einzelnen Komponenten in den im Rahmen der vorliegenden Anmeldung beanspruchten Verfahren und Verwendungen. Die im Rahmen dieser Anmeldung genannten Normen beziehen sich auf die jeweils zum Anmeldetag dieser Erfindung geltende Fassung.

KR 101 977 321 B1 offenbart orange und hitzestabile Polyamidzusammensetzungen worin Pigmente aus Mischoxiden, die Titandioxid, Zinnoxid und Zinkperoxid enthalten, eingesetzt werden. Ferner offenbart **"**A New Class of Weather-Fast Pigments" unter https://www.pcimag.com/articles/83054-a-new-class-of-weather-fast-pigments, 2005-04-01 explizit das Pigment Yellow 216 und dessen Säureresistenz, Wetter- und Hitzebeständigkeit sowie dessen Verarbeitung als Färbemittel in Kunststoffen und Beschichtungsmaterielaien. In **"**New Colour Index for BASF orange pigment" ADDITIVES FOR POLYMERS, Elsevier Advanced Technology, GB, Bd. 2009, Nr. 4, 1.4.2009, Seiten 3-4**,** wird der Einsatz von Pigment Orange 82 als Färbemittel für Polyamide vorgeschlagen.

Ausgehend jedoch von der Lehre der EP 0 041 274 B1 bestand die Aufgabe der vorliegenden Erfindung darin, orange Polymerzusammensetzungen auf Basis von Polyamid für Hochvoltkomponenten, insbesondere für Hochvoltkomponenten in Elektrofahrzeugen, bereitzustellen, die gegenüber der Lösung in EP 0 041 274 B1 auf Basis von 12H-Phthaloperin-12-on weniger anfällig für Migration, insbesondere Ausbluten (Bleeding) sind.

Überraschend wurde nun gefunden, dass Hochvoltkomponenten, insbesondere Hochvoltkomponenten für die Elektromobilität, enthaltend thermoplastische Polymerzusammensetzungen auf Basis von Polyamid und wenigstens einem Pigmentsystem auf der Basis anorganischer Mischoxide enthaltend Titandioxid, Zinnoxid und Zinkoxid als oranges Farbmittel sowohl die Anforderungen ans Bleeding, als auch an die Lichtechtheit und an die geforderte Laserbeschriftbarkeit erfüllen.

## Erfindungsgegenstand

Beschrieben sind Polymerzusammensetzungen, daraus herzustellende Erzeugnisse, vorzugsweise Hochvoltkomponenten, besonders bevorzugt Hochvoltkomponenten für die Elektromobilität, enthaltend

A) 100 Massenanteile Polyamid,
B) 0,01 bis 5 Massenanteile, besonders bevorzugt 0,01 bis 3 Massenanteile, wenigstens eines Pigmentsystems auf Basis anorganischer Mischoxide enthaltend Titandioxid, Zinnoxid und Zinkoxid,

mit der Maßgabe eines ΔE <30 zu den L*a*b* Koordinaten einer mit "2" beginnenden Farbnummer der RAL-Farbtabelle.

Die vorliegende Erfindung betrifft aber auch die Verwendung wenigstens eines als Komponente B) einzusetzenden Pigmentsystems auf Basis anorganischer Mischoxide enthaltend Titandioxid, Zinnoxid und Zinkoxid zur Herstellung Polyamid basierter Polymerzusammensetzungen, vorzugsweise Polyamid basierter Erzeugnisse, besonders bevorzugt Polyamid basierter Hochvoltkomponenten, insbesondere Polyamid basierter Hochvoltkomponenten für die Elektromobilität, wobei auf 100 Massenanteile wenigstens eines als Komponente A) einzusetzenden Polyamids 0,01 bis 5 Massenanteile, besonders bevorzugt 0,01 bis 3 Massenanteile von Komponente B) eingesetzt werden mit der Maßgabe eines ΔE <30 zu den L*a*b* Koordinaten einer mit "2" beginnenden Farbnummer der RAL-Farbtabelle.

Gegenstand der Erfindung betrifft zudem die Verwendung eines Pigmentsystems auf Basis anorganischer Mischoxide enthaltend Titandioxid, Zinnoxid und Zinkoxid als Laserbeschriftungsadditiv Polyamid basierter Erzeugnisse mittels Laser, vorzugsweise mittels Festkörperlaser mit Nd:YAG Kristallbei einer Wellenlänge von 1064nm, wobei auf 100 Massenanteile wenigstens eines Polyamids 0,01 bis 5 Massenanteile, besonders bevorzugt 0,01 bis 3 Massenanteile des Pigmentsystems eingesetzt werden mit der Maßgabe eines ΔE <30 zu den L*a*b* Koordinaten einer mit "2" beginnenden Farbnummer der RAL-Farbtabelle.

Vorzugsweise betrifft die Erfindung die Verwendung eines Pigmentsystems auf Basis anorganischer Mischoxide enthaltend Titandioxid, Zinnoxid und Zinkoxid als Laserbeschriftungsadditiv Polyamid basierter Hochvoltkomponenten, insbesondere Polyamid basierter Hochvoltkomponenten für die Elektromobilität, mittels Laser, vorzugsweise mittels Festkörperlaser mit Nd:YAG Kristall bei einer Wellenlänge von 1064nm, wobei auf 100 Massenanteile wenigstens eines Polyamids 0,01 bis 5 Massenanteile, besonders bevorzugt 0,01 bis 3 Massenanteile des Pigmentsystems eingesetzt werden mit der Maßgabe eines ΔE <30 zu den L*a*b* Koordinaten einer mit "2" beginnenden Farbnummer der RAL-Farbtabelle.

Die vorliegende Erfindung betrifft schließlich ein Verfahren zur Markierung Polyamid basierter Erzeugnisse als Hochvoltkomponenten, insbesondere Polyamid basierter Hochvoltkomponenten für die Elektromobilität, indem mittels Laser, vorzugsweise mittels Festkörperlaser mit Nd:YAG Kristall bei einer Wellenlänge von 1064nm, die Erzeugnisse bestrahlt und beschriftet werden, wobei die Erzeugnisse auf Polymerzusammensetzungen basieren, worin 0,01 bis 5 Massenanteile, besonders bevorzugt 0,01 bis 3 Massenanteile wenigstens eines Pigmentsystems auf Basis eines anorganischen Mischoxids enthaltend Titandioxid, Zinnoxid und Zinkoxid auf 100 Massenanteile wenigstens eines Polyamids eingesetzt werden mit der Maßgabe eines ΔE <30 zu den L*a*b* Koordinaten einer mit "2" beginnenden Farbnummer der RAL-Farbtabelle.

Die Zubereitung erfindungsgemäßer Polyamid basierter Polymerzusammensetzungen für die Herstellung von Erzeugnissen, vorzugsweise Hochvoltkomponenten, insbesondere Hochvoltkomponenten für die Elektromobilität, erfolgt durch Mischen der als Edukte einzusetzenden Komponenten A) wenigstens eines Polyamids mit B) wenigstens einem Pigmentsystem auf Basis anorganischer Mischoxide enthaltend Titandioxid, Zinnoxid und Zinkoxid in wenigstens einem Mischwerkzeug wobei auf 100 Massenanteile Komponente A) 0,01 bis 5 Massenanteile, besonders bevorzugt 0,01 bis 3 Massenanteile von Komponente B) eingesetzt werden und die Erzeugnisse, Hochvoltkomponenten oder Hochvoltkomponenten für die Elektromobilität ein ΔE <30 zu den L*a*b* Koordinaten einer mit "2" beginnenden Farbnummer der RAL-Farbtabelle aufweisen.

Durch das Mischen werden als Zwischenprodukte auf den erfindungsgemäßen Polymerzusammensetzungen basierende Formmassen erhalten. Diese Formmassen können entweder ausschließlich aus den Komponenten A) und B) bestehen, oder aber zusätzlich zu den Komponenten A) und B) noch wenigstens eine weitere Komponente enthalten. Im Falle erfindungsgemäßer Hochvoltkomponenten oder Hochvoltkomponenten für die Elektromobilität erfolgt die Zugabe wenigstens einer weiteren Komponente mit der Maßgabe eines ΔE <30 zu den L*a*b* Koordinaten einer mit "2" beginnenden Farbnummer der RAL-Farbtabelle.

Aus den oben genannten Gründen wird vorzugsweise auf den Einsatz Antimon-basierter Komponenten, insbesondere auf den Einsatz Antimontrioxid-haltiger Derivate, verzichtet.

### Weitere bevorzugte Ausführungsformen der Erfindung

In einer bevorzugten Ausführungsform enthalten die **Polymerzusammensetzungen** zusätzlich zu den Komponenten A) und B) noch C) wenigstens einen **Füll und/oder Verstärkungsstoff,** bevorzugt zu 1 bis 150 Massenanteilen, besonders bevorzugt zu 5 bis 80 Massenanteilen, ganz besonders bevorzugt zu 10 bis 50 Massenanteilen, jeweils bezogen auf 100 Massenanteile der Komponente A).

In einer weiteren bevorzugten Ausführungsform enthalten die **Polymerzusammensetzungen** zusätzlich zu den Komponenten A), B) und C) oder anstelle von C) noch D) wenigstens ein **Flammschutzmittel,** bevorzugt zu 3 bis 100 Massenanteilen, besonders bevorzugt zu 5 bis 80 Massenanteilen, ganz besonders bevorzugt zu 10 bis 50 Massenanteilen, jeweils bezogen auf 100 Massenanteile der Komponente A

In einer weiteren bevorzugten Ausführungsform enthalten die **Polymerzusammensetzungen** zusätzlich zu den Komponenten A), B), C), D) oder anstelle von C) und/oder D) noch E) wenigstens ein weiteres von **den Komponenten**

**B), C) und D) verschiedenes Additiv,** bevorzugt zu 0,01 bis 80 Massenanteile, besonders bevorzugt zu 0,05 bis 50 Massenanteile, ganz besonders bevorzugt zu 0,1 bis 30 Massenanteile, jeweils bezogen auf 100 Massenanteile der Komponente A).

**Komponente A)**

Die erfindungsgemäß als Komponente A) einzusetzenden **Polyamide** können nach verschiedenen Verfahren hergestellt und aus unterschiedlichen Bausteinen synthetisiert werden. Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichts oder auch Monomere mit reaktiven Gruppen für später beabsichtigte Nachbehandlungen eingesetzt werden können.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Als Edukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bisaminomethylcyclohexan, Phenylendiamine, Xylylendiamine, Aminocarbonsäuren wie z.B. Aminocapronsäure, bzw. die entsprechenden Lactame in Betracht. Besonders bevorzugt werden Caprolactame, insbesondere ε-Caprolactam eingesetzt. Copolyamide aus mehreren der genannten Monomeren sind eingeschlossen.

Bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als besonders bevorzugte Polyamide werden Polyamid 6, Polyamid 66, Polyamid 46 und/oder teilaromatischen Copolyamide eingesetzt. Bevorzugte teilaromatische Copolyamide sind PA6T/6, PA6T/66, PA6T/6I oder PAGT/6I/66.

Erfindungsgemäß ganz besonders bevorzugte Polyamide sind Polyamid 6 und Polyamid 66, wobei Polyamid 6 insbesondere ganz besonders bevorzugt ist.

Gegenstand der Erfindung sind deshalb vorzugsweise Hochvoltkomponenten, insbesondere Hochvoltkomponenten für die Elektromobilität, basierend auf Polymerzusammensetzungen enthaltend als Komponente A) 100 Massenanteile Polyamid 6 oder Polyamid 66 und 0,01 bis 5 Massenanteile, besonders bevorzugt 0,01 bis 3 Massenanteile, als Komponente B) einzusetzendes Pigmentsystem auf Basis anorganischer Mischoxide enthaltend Titandioxid, Zinnoxid und Zinkoxid mit der Maßgabe eines $\Delta E < 30$ zu den L*a*b* Koordinaten einer mit "2" beginnenden Farbnummer der RAL-Farbtabelle.

Die im Rahmen der vorliegenden Anmeldung benutzte Kennzeichnung der Polyamide entspricht der internationalen Norm **ISO 1874-1,** wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer α,ω- Aminocarbonsäure bzw. von dem davon abgeleiteten Lactam, im Falle des PA 6 also dem ε-Caprolactam, ausgegangen worden ist.

Das erfindungsgemäß insbesondere bevorzugt als Komponente A) einzusetzende PA6 [CAS Nr. 25038-54-4] hat vorzugsweise eine nach **ISO 307** in 0,5 gew.-%iger Lösung in 96 gew.-%iger Schwefelsäure bei 25 °C zu bestimmende Viskositätszahl im Bereich von 80 bis 180 ml/g, besonders bevorzugt im Bereich von 85 bis 160 ml/g und ganz besonders bevorzugt im Bereich von 90 bis 140 ml/g. Erfindungsgemäß bevorzugt als Komponente A) einzusetzendes Polyamid 6 ist beispielsweise als Durethan® B26 bei der Lanxess Deutschland GmbH, Köln erhältlich.

Bevorzugt weist ein als Komponente A) einzusetzendes Polyamid 66 [CAS Nr. 32131-17-2] eine nach **ISO 307** in 0,5 gew.-%iger Lösung in 96 gew.-%iger Schwefelsäure bei 25 °C zu bestimmende Viskositätszahl im Bereich von 80 bis 180 ml/g auf, ganz besonders bevorzugt eine Viskositätszahl im Bereich von 85 bis 160 ml/g, insbesondere bevorzugt im Bereich von 90 bis 140 ml/g. Erfindungsgemäß als Komponente A) einzusetzendes Polyamid 66 ist beispielsweise als Ultramid® A24E01 bei der BASF SE, Ludwigshafen, erhältlich.

Das erfindungsgemäß als Komponente A) einzusetzende Polyamid kann auch im Gemisch mit wenigstens einem anderen Polyamid, als Copolyamid und/oder wenigstens einem anderen Polymer eingesetzt werden. Bevorzugte andere Polymere werden ausgewählt aus der Gruppe Polyethylen, Polypropylen und Acrylnitril-Butadien-StyrolCopolymerisat (ABS). Im Falle des Einsatzes wenigstens eines weiteren Polyamids oder wenigstens eines anderen Polymers erfolgt dieser vorzugsweise oder gegebenenfalls unter Einsatz wenigstens eines Kompatibilisators.

Dem als Komponente A) einzusetzenden Polyamid können übliche Additive, vorzugsweise dem Fachmann bekannte Entformungsmittel, Stabilisatoren und/oder Fließhilfsmittel bereits in der Schmelze zugemischt werden.

**Komponente B)**

Erfindungsgemäß wird als Komponente B) wenigstens ein Pigmentsystem auf Basis anorganischer Mischoxide enthaltend Titandioxid, Zinnoxid und Zinkoxid eingesetzt. Ein erfindungsgemäß einzusetzendes Pigmentsystem auf Basis anorganischer Mischoxide enthaltend Titandioxid, Zinnoxid und Zinkoxid ist aus EP 0 113 229 B1 bekannt, ebenso dessen Herstellung. Das erfindungsgemäß als Komponente B) einzusetzende Pigment auf Basis anorganischer Mischoxide wird in EP 0 113 229 B1 auch als Pigmentsystem bezeichnet, weshalb in der vorliegenden Beschreibung beide Begriffe synonym verwendet werden.

Die anorganischen Mischoxide, in der EP 0 113 229 B1 auch als Komplexe bezeichnet, basieren auf Zinnoxid(en), Titandioxid und Zinkoxid(en).

Erfindungsgemäß bevorzugt sind Polymerzusammensetzungen bzw. Hochvoltkomponenten, insbesondere Hochvoltkomponenten für die Elektromobilität, enthaltend als Komponente B) Pigmentsysteme bzw. Laserbeschriftungsadditive in Form von Mischoxiden enthaltend Titandioxid, Zinnoxid und Zinkoxid mit der Maßgabe eines $\Delta E < 10$, insbesondere eines $\Delta E < 5$, zu den L*a*b* Koordinaten einer mit "2" beginnenden Farbnummer der RAL-Farbtabelle.

Besonders bevorzugt als Komponente B) einzusetzende Pigmentsysteme bzw. Laserbeschriftungsadditive sind Mischoxide enthaltend Titandioxid, Zinnoxid und Zinkoxid der CAS-Nr. 923954-49-8. Erfindungsgemäß insbesondere bevorzugt als Komponente B) sind C.I. Pigment Orange 82 [CAS-Nr. 2170864-77-2] oder C.I.Pigment Yellow 216 [CAS-Nr. 817181-98-9] einzusetzen. Bezüglich der C.I. Klassifizierung siehe:

**https://de.wikipedia.org/wiki/Colour_Index.**

Pigment Orange 82 kann beispielsweise unter dem Namen Sicopal® Orange K2430 bei der Firma BASF SE, Ludwigshafen, Deutschland bezogen werden. Pigment Yellow 216 kann beispielsweise unter dem Namen Orange 10P340 bei der Firma Shepherd, Gent, Belgien bezogen werden.

Das als Komponente B) einzusetzende wenigstens eine Pigmentsystem auf Basis anorganischer Mischoxide aus Titandioxid, Zinnoxid und Zinkoxid kann erfindungsgemäß einzeln oder im Gemisch mit wenigstens einem weiteren anorganischen Mischoxid aus Titandioxid, Zinnoxid und Zinkoxideingesetzt werden, mit der Maßgabe eines $\Delta E < 30$ zu einer Farbnummer beginnend mit einer "2" in der RAL-Farbtabelle, vorzugsweise zu einer der Farbnummern RAL 2000, RAL2003, RAL2004, RAL2007, RAL2008, RAL2009, RAL2010 oder RAL2011, besonders bevorzugt zu einer der Farbnummern RAL2003, RAL2004, RAL2008 oder RAL2009, ganz besonders bevorzugt zur Farbnummer RAL 2003.

Die erfindungsgemäß einzusetzende Komponente B) kann direkt als Pulver, oder aber in Form einer Paste oder eines Masterbatches, Kompaktes oder Konzentrates in Komponente A) eingesetzt werden, wobei Masterbatche bevorzugt sind und Masterbatche in einer der jeweiligen Komponente A) entsprechenden Polymermatrix besonders bevorzugt sind. Der Fachmann versteht unter dem Begriff Masterbatch Kunststoffadditive in Form von Granulaten, hier mit einem Gehalt an Farbmitteln oder Additiven, die höher sind als in der Endanwendung. Sie werden dem Polymer bzw. Kunststoff (Rohpolymer) zum Einfärben oder zur Veränderung seiner Eigenschaften beigemischt. Im Gegensatz zu pulverförmigen Zusatzstoffen erhöhen Masterbatche die technische Prozesssicherheit und sind zudem gut zu verarbeiten.

**Komponente C)**

In bevorzugter Ausführungsform wird als Komponente C) wenigstens ein **Füllstoff oder Verstärkungsstoff** eingesetzt. Dabei können auch Mischungen aus zwei oder mehreren unterschiedlichen Füllstoffen oder Verstärkungsstoffen eingesetzt werden.

Vorzugsweise wird wenigstens ein Füll- oder Verstärkungsstoff aus der Gruppe Kohlenstofffasern [CAS Nr. 7440-44-0], Glaskugeln oder Voll- oder Hohlglaskugeln, Glasfasern, gemahlenes Glas, amorphes Quarzglas, Aluminium-Borsilikatglas mit einem Alkaligehalt 1% (E-Glas) [CAS Nr. 65997-17-3], amorphe Kieselsäure [CAS Nr. 7631-86-9], Quarzmehl [CAS Nr. 14808-60-7], Calciumsilicat [CAS Nr. 1344-95-2], Calciummetasilicat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr.1317-65-3], Kyanit [CAS Nr. 1302-76-7], gepulverter oder gemahlener Quarz [CAS Nr. 14808-60-7], Glimmer [CAS Nr. 1318-94-1], Phlogopit [CAS Nr. 12251-00-2], Bariumsulfat [CAS Nr. 7727-43-7], Feldspat [CAS Nr. 68476-25-5], Wollastonit [CAS Nr. 13983-17-0], Montmorillonit [CAS Nr. 67479-91-8], Pseudoböhmit der Formel AlO(OH), Magnesiumcarbonat [CAS Nr. 12125-28-9] und Talkum [CAS Nr. 14807-96-6] eingesetzt.

Unter den faserförmigen Füllstoffen oder Verstärkungsstoffen sind Glasfasern und Wollastonit besonders bevorzugt, wobei Glasfasern ganz besonders bevorzugt sind. Es können auch Kohlenstofffasern als Füllstoff oder Verstärkungsstoff eingesetzt werden.

Bezüglich der Glasfasern unterscheidet der Fachmann gemäß **"http://de.wikipedia.org/wiki/Faser-Kunststoff-Verbund"** geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden

vorzugsweise in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 μm liegt.

Erfindungsgemäß bevorzugt als Komponente C) einzusetzende Glasfasern sind geschnittene Langglasfasern mit einer mittels Laserdiffraktometrie gemäß ISO 13320 zu bestimmenden mittleren Ausgangslänge im Bereich von 1 bis 50 mm, besonders bevorzugt im Bereich von 1 bis 10 mm, ganz besonders bevorzugt im Bereich von 2 bis 7 mm. Zu Laserbeugungs-Partikelgrößenbestimmung/Laserdiffraktometrie gemäß der Norm ISO 13320 siehe:

**https://de.wikipedia.org/wiki/Laserbeugungs-Partikelgr%C3%B6%C3%9Fenanalyse**

Bevorzugte, als Komponente C) einzusetzende Glasfasern haben einen mittels Laserdiffraktometrie gemäß **ISO 13320** zu bestimmenden mittleren Faserdurchmesser im Bereich von 7 bis 18 μm, besonders bevorzugt im Bereich von 9 bis 15 μm.

Die als Komponente C) einzusetzenden Füllstoffe, vorzugsweise Glasfasern, werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt. Besonders bevorzugte Haftvermittler auf Silanbasis für die Behandlung der Komponente C), insbesondere für die Behandlung von Glasfasern, sind Silanverbindungen der allgemeine Formel (I)

$$(X-(CH_2)_q)_k-Si-(O-CrH_{2r+1})_{4-k} \qquad (I)$$

worin

X für $NH_2$-, Carboxyl-, HO- oder

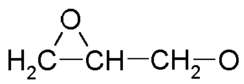

steht,

q in Formel (I) für eine ganze Zahl von 2 bis 10, bevorzugt 3 bis 4 steht,

r in Formel (I) für eine ganze Zahl von 1 bis 5, bevorzugt 1 bis 2 steht und

k in Formel (I) für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidyl- oder eine Carboxylgruppe enthalten, wobei Carboxylgruppen insbesondere ganz besonders bevorzugt sind.

Für die Ausrüstung der als Komponente C) einzusetzenden Füllstoffe, vorzugsweise Glasfasern, wird der Haftvermittler, bevorzugt die Silanverbindungen gemäß Formel (I), bevorzugt in Mengen im Bereich von 0,05 bis 2 Gew.-%, besonders bevorzugt in Mengen im Bereich von 0,25 bis 1,5 Gew.-% und ganz besonders bevorzugt in Mengen im Bereich von 0,5 bis 1 Gew.-%, jeweils bezogen auf 100 Gew.-% Komponente C), eingesetzt.

Die als Komponente C) vorzugsweise einzusetzenden Glasfasern können bedingt durch die Verarbeitung zur Zusammensetzung bzw. zum Erzeugnis in der Zusammensetzung bzw. im Erzeugnis kürzer sein, als die ursprünglich eingesetzten Glasfasern. So liegt der mittels hochauflösender Röntgencomputertomographie zu bestimmende arithmetische Mittelwert der Glasfaserlänge nach der Verarbeitung häufig nur noch im Bereich von 150 μm bis 300 μm.

Gemäß **"http://www.r-g.de/wiki/Glasfasern"** werden Glasfasern im Schmelzspinnverfahren (Düsenzieh-, Stabzieh- und Düsenblasverfahren) hergestellt. Beim Düsenziehverfahren fließt unter Ausnutzung der Schwerkraft die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.

Der Fachmann unterscheidet verschiedene Glasfasersorten, wovon hier beispielsweise einige gelistet sind:

- E-Glas, das meistverwendete Material mit optimalem Preis-Leistungsverhältnis (E-Glas von R&G)
- H-Glas, Hohlglasfasern für reduziertes Gewicht (R&G Glashohlfasergewebe 160 g/$m^2$ und 216 g/$m^2$)
- R, S-Glas, für erhöhte mechanische Anforderungen (S2-Glas von R&G)
- D-Glas, Borsilicatglas für erhöhte elektrische Anforderungen
- C-Glas, mit erhöhter chemischer Widerstandsfähigkeit
- Quarzglas, mit hoher Temperaturbeständigkeit

Weitere Beispiele finden sich unter **"http://de.wikipedia.org/wiki/Glasfaser".** Für die Kunststoffverstärkung haben E-Glasfasern die größte Bedeutung erlangt. E steht für Elektro-Glas, da es ursprünglich vor allem in der Elektroindustrie eingesetzt wurde. Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte. Erfindungsgemäß bevorzugt wird wenigstens eine Sorte Glasfasern aus der Gruppe E-Glas, H-Glas, R,S-Glas, D-Glas, C-Glas und Quarzglas eingesetzt, besonders bevorzugt Glasfasern aus E-Glas.

Glasfasern aus E-Glas sind der am weitesten verbreitete Verstärkungswerkstoff. Die Festigkeitseigenschaften entsprechen denen von Metallen (z.B. Alu-Legierungen), wobei das spezifische Gewicht von E-Glasfasern enthaltenden Laminaten niedriger ist, als das der Metalle. E-Glasfasern sind unbrennbar, hitzefest bis ca. 400 °C und beständig gegen die meisten Chemikalien und Witterungseinflüsse.

Bevorzugt werden als Komponente C) ferner auch nadelförmige mineralische Füllstoffe eingesetzt. Unter nadelförmigen, mineralischen Füllstoffen wird erfindungsgemäß ein mineralischer Füllstoff mit stark ausgeprägtem nadelförmigen Charakter verstanden. Bevorzugt als Komponente C) einzusetzender nadelförmiger mineralischer Füllstoff ist Wollastonit. Bevorzugt weist der nadelförmige, mineralische Füllstoff ein mittels hochauflösender Röntgencomputertomographie zu bestimmendes Länge : Durchmesser - Verhältnis im Bereich von 2:1 bis 35:1, besonders bevorzugt im Bereich von 3:1 bis 19:1, insbesondere bevorzugt im Bereich von 4:1 bis 12:1 auf. Die mittels hochauflösender Röntgencomputertomographie zu bestimmende mittlere Teilchengröße der nadelförmigen, mineralischen Füllstoffe liegt bevorzugt bei kleiner 20 μm, besonders bevorzugt bei kleiner 15 μm, insbesondere bevorzugt bei kleiner 10 μm.

Bevorzugt wird als Komponente C) aber auch nicht-faserförmiges und nicht-geschäumtes gemahlenes Glas mit einer mittels Laserdiffraktometrie gemäß **ISO 13320** zu bestimmenden Teilchengrößenverteilung mit einem d90 im Bereich von 5 bis 250 μm eingesetzt, bevorzugt mit einem d90 im Bereich von 10 bis 150 μm, besonders bevorzugt mit einem d90 im Bereich von 15 bis 80 μm, ganz besonders bevorzugt mit einem d90 im Bereich von 16 bis 25 μm. Bezüglich der d90-Werte, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d90-Wert diejenige Partikelgröße ist, unterhalb derer 90 % der Partikelmenge liegen.

Erfindungsgemäß bevorzugt ist ein nicht-faserförmiges und nicht-geschäumtes gemahlenes Glas von partikelförmiger, nicht zylindrischer Gestalt mit einem mittels Laserdiffraktometrie gemäß **ISO 13320** zu bestimmenden Längen- zu Dickenverhältnis kleiner 5, bevorzugt kleiner als 3, besonders bevorzugt kleiner 2. Der Wert Null ist selbstverständlich ausgeschlossen.

Das in einer Ausführungsform als Komponente C) besonders bevorzugt einzusetzende nicht-geschäumte und nicht faserförmige gemahlene Glas ist zudem dadurch gekennzeichnet, dass es nicht die für faserförmiges Glas typische Glasgeometrie mit zylindrischem oder ovalen Querschnitt mit einem mittels Laserdiffraktometrie gemäß **ISO 13320** zu bestimmenden Längen- zu Durchmesserverhältnis (L/D-Verhältnis) größer 5 aufweist.

Das in einer Ausführungsform erfindungsgemäß als Komponente C) besonders bevorzugt einzusetzende nicht-geschäumte und nicht-faserförmige gemahlene Glas wird bevorzugt durch Mahlung von Glas mit einer Mühle, bevorzugt einer Kugelmühle und besonders bevorzugt mit anschließender Sichtung bzw. Siebung erhalten. Bevorzugte Edukte für die Vermahlung des in einer Ausführungsform als Komponente C) einzusetzenden nichtfaserförmigem und nicht-geschäumten, gemahlenen Glas sind auch Glasabfälle, wie sie insbesondere bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall-, Recycling- und Bruchglas wie es insbesondere bei der Herstellung von Fenster- oder Flaschenglas, sowie bei der Herstellung von glashaltigen Füll- und Verstärkungsstoffen, insbesondere in Form von sogenannten Schmelzekuchen, anfallen kann. Das Glas kann gefärbt sein, wobei nichtgefärbtes Glas als Ausgangsmaterial zum Einsatz als Komponente C) bevorzugt ist.

**Komponente D)**

In bevorzugter Ausführungsform wird als Komponente D) wenigstens ein Flammschutzmittel eingesetzt. Bevorzugte **Flammschutzmittel** sind von Komponente C) verschiedene mineralische Flammschutzmittel, stickstoffhaltige Flammschutzmittel oder phosphorhaltige Flammschutzmittel.

Unter den mineralischen Flammschutzmitteln ist Magnesiumhydroxid besonders bevorzugt. Magnesiumhydroxid [CAS Nr. 1309-42-8] kann aufgrund seiner Herkunft und Herstellungsweise verunreinigt sein. Typische Verunreinigungen sind z.B. Silicium-, Eisen-, Calcium- und/oder Aluminium-haltige Spezies, die beispielsweise in Form von Oxiden in den Magnesiumhydroxid-Kristallen eingelagert sein können. Das als mineralisches Flammschutzmittel einzusetzende Magnesiumhydroxid kann unbeschlichtet oder aber mit einer Schlichte versehen sein. Eine Schlichte fördert qualitätsbeeinflussend den mechanischen Verbund zwischen Kunststoff(matrix) und der mit Schlichte zu versehenden Komponente. Vorzugsweise wird das als mineralisches Flammschutzmittel vorzugsweise einzusetzende Magnesiumhydroxid mit Schlichten auf Basis von Stearaten oder Aminosiloxanen, besonders bevorzugt mit Aminosiloxanen versehen. Vorzugsweise als mineralisches Flammschutzmittel einzusetzendes Magnesiumhydroxid hat eine mittels Laserdiffraktometrie gemäß **ISO 13320** zu bestimmende mittlere Teilchengröße d50 im Bereich von 0,5 $\mu$m bis 6 $\mu$m, wobei ein d50 im Bereich von 0,7 $\mu$m bis 3,8 $\mu$m bevorzugt und ein d50 im Bereich von 1,0 $\mu$m bis 2,6 $\mu$m besonders bevorzugt ist.

Erfindungsgemäß als mineralisches Flammschutzmittel geeignete Magnesiumhydroxidtypen sind beispielsweise Magnifin® H5IV der Martinswerk GmbH, Bergheim, Deutschland oder Hidromag® Q2015 TC der Firma Penoles, Mexiko-Stadt, Mexico.

Bevorzugte stickstoffhaltige Flammschutzmittel sind die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz, ferner Melamincyanurat und Kondensationsprodukte des Melamins, insbesondere Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer und aromatischer Sulfonsäuren und mineralische Flammschutzadditive, insbesondere Aluminiumhydroxid oder Ca-Mg-Carbonat-Hydrate **(**DE-A 4 236 122**)** eingesetzt werden.

In Frage kommen für den Einsatz als Komponente D) ferner Flammschutzmittelsynergisten aus der Gruppe der sauerstoff- stickstoff- oder schwefelhaltigen Metallverbindungen. Bevorzugt sind dabei zinkfreie Verbindungen, insbesondere Molybdänoxid, Magnesiumoxid, Magnesiumcarbonat, Calciumcarbonat, Calciumoxid, Titannitrid, Magnesiumnitrid, Calciumphosphat, Calciumborat, Magnesiumborat oder deren Mischungen.

In einer alternativen Ausführungsform können als Komponente D) aber auch - sofern es der Bedarf erfordert - zinkhaltige Verbindungen eingesetzt werden. Hierzu zählen bevorzugt Zinkoxid, Zinkborat, Zinkstannat, Zinkhydroxystannat, Zinksulfid und Zinknitrid, oder deren Mischungen.

Bevorzugte phosphorhaltige Flammschutzmittel sind organische Metallphosphinate, Aluminiumsalze der Phosphonsäure, roter Phosphor, anorganische Metallhypophosphite, Metallphosphonate, Derivate der 9,10-Dihydro-9-oxa-10-phosphaphenanthren-10-oxide (DOPO-Derivate), Resorcinol-bis-(diphenylphosphat) (RDP) einschließlich Oligomere, Bisphenol-A-bis-diphenylphosphat (BDP) einschließlich Oligomere, Melaminpyrophosphat, Melaminpolyphosphat, Melamin-poly(aluminiumphosphat), Melamin-poly(zinkphosphat) oder Phenoxyphosphazenoligomere und deren Mischungen.

Ein bevorzugtes organisches Metallphosphinat ist Aluminium-tris(diethylphosphinat). Ein bevorzugtes anorganisches Metallhypophosphit ist Aluminiumhypophosphit.

Weitere als Komponente D) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die als Komponente D) einzusetzenden Flammschutzmittel können in Reinform, sowie über Masterbatche oder Kompaktate der Komponente A) zugesetzt werden.

In einer alternativen Ausführungsform können als Flammschutzmittel aber auch - sofern der Bedarf es erfordert unter Berücksichtigung der Nachteile durch den Verlust der Halogenfreiheit der Flammschutzmittel - halogenhaltige Flammschutzmittel eingesetzt werden. Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten eingesetzt werden können, wobei unter den halogenhaltigen Flammschutzmitteln bromiertes Polystyrol besonders bevorzugt ist. Bromiertes Polystyrol wird dabei bevorzugt zu 10 - 30 Gew.-%, besonders bevorzugt zu 15 - 25 Gew.% eingesetzt, jeweils bezogen auf die Gesamtzusammensetzung, wobei wenigstens eine der übrigen Komponenten soweit reduziert wird, dass die Summe aller Gewichtsprozente stets 100 ergibt.

In einer weiteren alternativen Ausführungsform können als Flammschutzmittelsynergisten aber auch - sofern der Bedarf es erfordert und unter Berücksichtigung der anfangs beschriebenen Nachteile hinsichtlich der Gefahrenklassifizierung H351 - auch Antimontrioxid und Antimonpentoxid eingesetzt werden.

Bromiertes Polystyrol ist in diversen Produktqualitäten kommerziell verfügbar. Beispiele hierfür sind z.B. Firemaster® PBS64 der Fa. Lanxess, Köln, Deutschland sowie Saytex® HP-3010 der Fa. Albemarle, Baton Rouge, USA.

Unter den als Komponente D) einzusetzenden Flammschutzmitteln sind Aluminium-tris(diethylphosphinat)] [CAS Nr. 225789-38-8] sowie die Kombination aus Aluminium-tris(diethylphosphinat) und Melaminpolyphosphat oder die Kombination aus Aluminium-tris(diethylphosphinat) und mindestens einem Aluminiumsalz der Phosphonsäure ganz besonders bevorzugt, wobei letztere Kombination insbesondere bevorzugt ist.

Im Falle der Kombinationen aus Aluminium-tris(diethylphosphinat) und Melaminpolyphosphat bzw. aus Aluminium-tris(diethylphosphinat) und mindestens einem Aluminiumsalz der Phosphonsäure liegt der Anteil an Aluminium-tris(diethylphosphinat) bevorzugt im Bereich von 40 bis 90 Gewichtsteilen, besonders bevorzugt im Bereich von 50 bis 80 Gewichtsteilen, ganz besonders bevorzugt im Bereich von 60 bis 70 Gewichtsteilen, jeweils bezogen auf 100 Gewichtsteile der Kombination aus Aluminium-tris(diethylphosphinat) und Melaminpolyphosphat bzw. der Kombination aus Aluminium-tris(diethylphosphinat) und mindestens einem Aluminiumsalz der Phosphonsäure.

Als Komponente D) einzusetzendes Aluminium-tris(diethylphosphinat) ist dem Fachmann als Exolit® OP1230 oder Exolit® OP1240 der Fa. Clariant International Ltd. Muttenz, Schweiz, bekannt. Melaminpolyphosphat ist in diversen Produktqualitäten kommerziell verfügbar. Beispiele hierfür sind z.B. Melapur® 200/70 der Fa. BASF, Ludwigshafen, Deutschland sowie Budit® 3141 der Fa. Budenheim, Budenheim, Deutschland.

Bevorzugte Aluminiumsalze der Phosphonsäure sind ausgewählt aus der Gruppe

primäres Aluminiumphosphonat [$Al(H_2PO_3)_3$],

basisches Aluminiumphosphonat [$Al(OH)H_2PO_3)_2 \cdot 2H_2O$],

$Al_2(HPO_3)_3 \cdot x\ Al_2O_3 \cdot nH_2O$ mit x im Bereich von 2,27 bis 1 und n im Bereich von 0 bis 4,

$Al_2(HPO_3)_3 \cdot (H_2O)_q$ der Formel (II) mit q im Bereich von 0 bis 4, insbesondere Aluminiumphosphonattetrahydrat [$Al_2(HPO_3)_3 \cdot 4H_2O$] oder sekundäres Aluminiumphosphonat [$Al_2(HPO_3)_3$],

$Al_2M_z(HPO_3)_y(OH)_v \cdot (H_2O)_w$ der Formel (III) worin M Alkalimetallion(en) bedeutet und z im Bereich von 0,01 bis 1,5, y im Bereich von 2,63 - 3,5, v im Bereich von 0 bis 2 und w im Bereich von 0 bis 4 liegt, und

$Al_2(HPO_3)_u(H_2PO_3)_t \cdot (H_2O)_s$ der Formel (IV), worin u im Bereich von 2 bis 2,99, t im Bereich von 2 bis 0,01 und s im Bereich von 0 bis 4 liegt,

wobei in Formel (III) z, y und v sowie in Formel (IV) u und t nur solche Zahlen annehmen können, dass das entsprechende Aluminiumsalz der Phosphonsäure als Ganzes ungeladen ist.

Bevorzugte Alkalimetalle M in Formel (III) sind Natrium und Kalium.

Die beschriebenen Aluminiumsalze der Phosphonsäure können dabei einzeln oder im Gemisch eingesetzt werden.

Besonders bevorzugte Aluminiumsalze der Phosphonsäure werden ausgewählt aus der Gruppe

primäres Aluminiumphosphonat [$Al(H_2PO_3)_3$],

sekundäres Aluminiumphosphonat [$Al_2(HPO_3)_3$],

basisches Aluminiumphosphonat [$Al(OH)H_2PO_3)_2 \cdot 2H_2O$],

Aluminiumphosphonattetrahydrat [$Al_2(HPO_3)_3 \cdot 4H_2O$] und

$Al_2(HPO_3)_3 \cdot x\ Al_2O_3 \cdot n\ H_2O$ mit x im Bereich von 2,27 bis 1 und n im Bereich von 0 bis 4.

Ganz besonders bevorzugt sind sekundäres Aluminiumphosphonat $Al_2(HPO_3)_3$ [CAS Nr. 71449-76-8] und sekundäres Aluminiumphosphonattetrahydrat $Al_2(HPO_3)_3 \cdot 4H_2O$ [CAS Nr. 156024-71-4], insbesondere bevorzugt ist sekundäres Aluminiumphosphonat $Al_2(HPO_3)_3$.

Die Herstellung erfindungsgemäß als Komponente D) einzusetzender Aluminiumsalze der Phosphonsäure ist zum Beispiel in WO 2013/083247 A1 beschrieben. Sie erfolgt üblicherweise durch Umsetzung einer Aluminiumquelle, bevorzugt Aluminiumisopropoxid, Aluminiumnitrat, Aluminiumchorid oder Aluminiumhydroxid, mit einer Phosphorquelle,

bevorzugt Phosphonsäure, Ammoniumphosphonat, Alkaliphosphonat, und wahlweise mit einem Templat in einem Lösungsmittel bei 20 bis 200°C während einer Zeitspanne von bis zu 4 Tagen. Aluminiumquelle und Phosphorquelle werden dazu vermischt, unter hydrothermalen Bedingungen oder unter Rückfluss erhitzt, abfiltriert gewaschen und getrocknet. Bevorzugte Template dabei sind 1,6 Hexandiamin, Guanidincarbonat oder Ammoniak. Bevorzugtes Lösungsmittel ist Wasser.

**Komponente E)**

Als Komponente E) wird wenigstens ein weiteres, von den Komponenten B) bis D) unterschiedliches Additiv eingesetzt. Bevorzugte als Komponente E) einzusetzende Additive sind Antioxidantien, Thermostabilisatoren, UV-Stabilisatoren, Gammastrahlenstabilisatoren, Komponenten zur Verringerung der Wasseraufnahme bzw. Hydrolysestabilisatoren, Antistatika, Emulgatoren, Nukleierungsmittel, Weichmacher, Verarbeitungshilfsmittel, Schlagzähmodifikatoren, Gleit- und/oder Entformungsmittel, Komponenten zur Verringerung der Wasseraufnahme, Fließhilfsmittel oder Elastomermodifikatoren, kettenverlängernd wirkende Additive, von Komponenten B) verschiedene Farbmittel, und soweit es der Bedarf erfordert, weitere Laserabsorber. Die Additive können alleine oder in Mischung bzw. in Form von Masterbatchen eingesetzt werden.

Bevorzugte **Thermostabilisatoren** der Komponente E) sind sterisch gehinderte Phenole, insbesondere solche enthaltend mindestens eine 2,6-Di-tert.-butylphenyl-Gruppe und/oder 2-tert.-Butyl-6-methylphenyl-Gruppe, ferner Phosphite, Hypophosphite, insbesondere Natriumhypophosphit $NaH_2PO_2$, Hydrochinone, aromatische sekundäre Amine, substituierte Resorcine, Salicylate, Benzotriazole und Benzophenone, 3,3'-Thiodipropionsäureester sowie verschieden substituierte Vertreter dieser Gruppen oder deren Mischungen.

In einer Ausführungsform können als Thermostabilisatoren der Komponente E) auch Kupfersalze, vorzugsweise in Kombination mit Natriumhypophosphit $NaH_2PO_2$ eingesetzt werden. Bevorzugt wird als Kupfersalz Kupfer(I) iodid [CAS Nr. 7681-65-4] und/oder Kupfer(triphenylphosphino)iodid [CAS Nr. 47107-74-4] eingesetzt. Vorzugsweise werden die Kupfersalze in Kombination mit Natriumhypophosphit $NaH_2PO_2$ oder mit wenigstens einem Alkaliiodid eingesetzt. Bevorzugtes Alkaliiodid ist Kaliumiodid [CAS Nr. 7681-11-0].

Als Komponente E) einzusetzende Thermostabilisatoren werden vorzugsweise zu 0,01 bis 2 Massenanteilen, besonders bevorzugt zu 0,05 bis 1 Massenanteilen, jeweils bezogen auf 100 Massenanteile der Komponente A) eingesetzt.

Als Komponente E) einzusetzende **UV-Stabilisatoren** werden vorzugsweise substituierte Resorcine, Salicylate, Benzotriazole und Benzophenone, HALS-Derivate ("Hindered Amine Light Stabilizers") enthaltend mindestens eine 2,2,6,6-Tetramethyl-4-piperidyl-Einheit oder Benzophenone eingesetzt.

Als Komponente E) einzusetzende UV-Stabilisatoren werden vorzugsweise zu 0,01 bis 2 Massenanteilen, besonders bevorzugt zu 0,1 bis 1 Massenanteilen, jeweils bezogen auf 100 Massenanteile der Komponente A) eingesetzt.

Als Komponente E) einzusetzende und von Komponente B) verschiedene **Farbmittel** werden in einer Ausführungsform bevorzugt anorganische Pigmente eingesetzt, besonders bevorzugt Ultramarinblau, Bismutvanadat [CAS Nr. 14059-33-7], Eisenoxid [CAS Nr. 1309-37-1], Titandioxid [CAS Nr. 13463-67-7 (Rutil) oder CAS Nr. 1317-70-0 (Anatas)], Bariumsulfat [CAS Nr. 7727-43-7], Zinksulfid [CAS Nr. 1314-98-3] oder Sulfide enthaltend Cer. Bevorzugte Sulfide enthaltend Cer sind Cer(III)sulfid ($Ce_2S_3$) [CAS-Nr. 12014-93-6], auch bekannt als C.I.Pigment Orange 75, oder Cer(III) sulfid / Lanthan(III)sulfid ($Ce_2S_3$ / $La_2S_3$) [CAS-Nr. 12014-93-6 ; CAS-Nr. 12031-49-1] auch bekannt als C.I. Pigment Orange 78. Insbesondere bevorzugt ist Bariumsulfat.

Als Komponente E) einzusetzende und von Komponente B) verschiedene **Farbmittel** werden in einer Ausführungsform bevorzugt organische Farbmittel eingesetzt, besonders bevorzugt Phthalocyanine, Chinacridone, Benzimidazole, insbesondere Ni-2-hydroxy-naphthyl-benzimidazol [CAS Nr. 42844-93-9] und/oder Pyrimidin-azo-benzimidazol [CAS-Nr. 72102-84-2] und/oder Pigment Yellow 192 [CAS Nr. 56279-27-7], außerdem Perylene, Anthrachinone, insbesondere C.I. Solvent Yellow 163 [CAS Nr. 13676-91-0].

Die Aufzählung als Komponente E) einzusetzender anorganischer oder organischer ist nicht abschließend.

In einer Ausführungsform kann, soweit es der Bedarf erfordert als Farbmittel auch Ruß oder Nigrosin eingesetzt werden.

In einer bevorzugten Ausführungsform wird für Komponente E) Titandioxid als Farbmittel Titanweiß, auch als Pigment White 6 oder CI 77891 bezeichnet, eingesetzt.

Als Komponente E) einzusetzende **Nukleierungsmittel** werden bevorzugt Natrium- oder Calciumphenylphosphinat, Aluminiumoxid oder Siliziumdioxid sowie ganz besonders bevorzugt Talkum eingesetzt, wobei diese Aufzählung nicht abschließend ist.

Als Komponente E) einzusetzende **Fließhilfsmittel** werden bevorzugt Copolymerisate aus mindestens einem $\alpha$-Olefin mit mindestens einem Methacrylsäurester oder Acrylsäureester eines aliphatischen Alkohols eingesetzt. Besonders bevorzugt sind dabei Copolymerisate, bei denen das $\alpha$-Olefin aus Ethen und/oder Propen aufgebaut ist

und der Methacrylsäurester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester. Als Fließhilfsmittel geeignete Copolymerisate zeichnen sich neben der Zusammensetzung auch durch das niedrige Molekulargewicht aus. Dementsprechend sind für die erfindungsgemäß vor thermischem Abbau zu bewahrenden Polymerzusammensetzungen vor allem Copolymerisate geeignet, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen **ISO 1133** oder **ASTM D** 1238. Insbesondere bevorzugt wird als Fließhilfsmittel ein Copolymerisat aus Ethen und Acrylsäure-(2-ethyl)-hexylester mit MFI 550 eingesetzt, bekannt als Lotryl® 37EH550.

Als Komponente E) einzusetzende **kettenverlängernde Additive** werden bevorzugt di- oder mehrfunktionelle verzweigend oder kettenverlängernd wirkende Additive, enthaltend mindestens zwei verzweigend oder kettenverlängernd wirkende funktionelle Gruppen pro Molekül, eingesetzt. Als verzweigende bzw. kettenverlängende Additive werden niedermolekulare oder oligomere Verbindungen bevorzugt, die über mindestens zwei kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, Alkohole, blockierte Isocyanate, Epoxide, Maleinsäureanhydrid, Oxazoline, Oxazine, Oxazolone, wobei Epoxide bevorzugt sind.

Insbesondere bevorzugte di- oder mehrfunktionelle verzweigend oder kettenverlängernd wirkende Additive sind Diepoxide auf Basis Diglycidylether (Bisphenol und Epichlorhydrin), auf Basis von Aminepoxidharz (Anilin und Epichlorhydrin), auf Basis von Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei Epoxidgruppen pro Molekül.

Besonders bevorzugte di- oder mehrfunktionelle verzweigend oder kettenverlängernd wirkende Additive sind Glycidylether, ganz besonders bevorzugt Bisphenol A-Diglycidylether [CAS Nr. 98460-24-3] oder epoxidierte Fettsäureester des Glycerins, sowie auch ganz besonders bevorzugt epoxidiertes Sojaöl [CAS Nr. 8013-07-8] und/oder epoxidiertes Leinöl.

Bevorzugt als Komponente E) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Bevorzugt als Komponente E) einzusetzende **Elastomermodifikatoren** umfassen u.a. ein oder mehrere Pfropfpolymerisate von

E.1 5 bis 95 Gew.-%, vorzugsweise 30 bis 90 Gew.-%, wenigstens eines Vinylmonomeren und

E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C, wobei die Gewichtsprozente sich auf 100 Gew.-% Elastomermodifikator beziehen.

Die Pfropfgrundlage E.2 hat im allgemeinen eine mittels Laserdiffraktometrie gemäß **ISO 13320** zu bestimmende mittlere Teilchengröße d50-Wert im Bereich von 0,05 bis 10 $\mu$m, vorzugsweise im Bereich von 0,1 bis 5 $\mu$m, besonders bevorzugt im Bereich von 0,2 bis 1 $\mu$m.

Monomere zu E.1 sind vorzugsweise Gemische aus

E.1.1 50 bis 99 Gew.-% Vinylaromaten und/oder kernsubstituierten Vinylaromaten, insbesondere Styrol, $\alpha$-Methylstyrol, p-Methylstyrol, p-Chlorstyrol, und/oder Methacrylsäure-($C_1$-$C_8$)-Alkylester, insbesondere. Methylmethacrylat, Ethylmethacrylat) und

E.1.2 1 bis 50 Gew.-% Vinylcyanide, insbesondere ungesättigte Nitrile wie Acrylnitril und Methacrylnitril, und/oder (Meth)Acrylsäure-($C_1$-$C_8$)-alkylester, insbesondere Methylmethacrylat, Glycidylmethacrylat, n-Butylacrylat, t-Butylacrylat, und/oder Derivate ,insbesondere Anhydride und Imide ungesättigter Carbonsäuren, insbesondere Maleinsäureanhydrid oder N-Phenyl-Maleinimid, wobei die Gewichtsprozente sich auf 100 Gew.-% Elastomermodifikator beziehen.

Bevorzugte Monomere E.1.1 sind auszuwählen aus mindestens einem der Monomere Styrol, $\alpha$-Methylstyrol und Methylmethacrylat, bevorzugte Monomere E.1.2 sind ausgewählt aus mindestens einem der Monomere Acrylnitril, Maleinsäureanhydrid, Glycidylmethacrylat und Methylmethacrylat. Besonders bevorzugte Monomere sind E.1.1 Styrol und E.1.2 Acrylnitril.

Für die in den Elastomermodifikatoren einzusetzenden Pfropfpolymerisate geeignete Pfropfgrundlagen E.2 sind beispielsweise Dienkautschuke, EPDM-Kautschuke, also solche auf Basis Ethylen/Propylen und gegebenenfalls Dien,

ferner Acrylat-, Polyurethan-, Silikon-, Chloropren und Ethylen/Vinylacetat-Kautschuke. EPDM steht für Ethylen-Propylen-Dien-Kautschuk.

Bevorzugte Pfropfgrundlagen E.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß E.1.1 und E.1.2, mit der Maßgabe, dass die Glasübergangstemperatur der Komponente E.2 bei <10°C, vorzugsweise bei <0°C, besonders bevorzugt bei <-10°C liegt.

Besonders bevorzugte Propfgrundlagen E.2 sind ABS-Polymerisate (Emulsions-, Masse- und Suspensions-ABS) wobei ABS für Acrylnitril-Butadien-Styrol steht, wie sie z. B. in der DE-A 2 035 390 oder in der DE-A 2 248 242 bzw. in Ullmann, Enzyklopädie der Technischen Chemie, Bd. 19 (1980), S. 277 - 295 beschrieben sind. Der Gelanteil der Pfropfgrundlage E.2 beträgt bevorzugt mindestens 30 Gew.-%, besonders bevorzugt mindestens 40 Gew.-% (in Toluol gemessen).

Die als Komponente E) einzusetzenden Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören $C_1$-$C_8$-Alkylester, vorzugsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat, Glycidylester sowie Mischungen dieser Monomeren. Dabei sind Propfpolymerisate mit Butylacrylat als Kern und Methylmethacrylaten als Schale, insbesondere Paraloid® EXL2300, Fa. Dow Corning Corporation, Midland, Michigan, USA, besonders bevorzugt.

Zur Vernetzung können alternativ zu den ethylenisch ungesättigten Monomeren Monomere mit mehr als einer polymerisierbaren Doppelbindung copolymerisiert werden. Bevorzugte vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Besonders bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Ganz besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, $\alpha$-Methylstyrol, Acrylamide, Vinyl-$C_1$-$C_6$-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere bevorzugt geeignete Pfropfgrundlagen gemäß E.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Bevorzugte Propfpolymerisate mit einem Silikonanteil sind solche, die Methylmethacrylat oder Styrol-Acrylnitril als Schale und ein Silikon/Acrylat-Propf als Kern aufweisen. Bevorzugt als Schale einzusetzendes Styrol-Acrylnitril ist Metablen® SRK200. Bevorzugt als Schale einzusetzendes Methylmethacrylat ist Metablen® S2001 oder Metablen® S2030 oder Metablen® SX-005. Besonders bevorzugt wird Metablen® S2001 eingesetzt. Die Produkte mit dem Handelsnamen Metablen® sind erhältlich bei Mitsubishi Rayon Co., Ltd., Tokio, Japan.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und

heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, $\alpha$-Methylstyrol, Acrylamide, Vinyl-$C_1$-$C_6$-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10 °C, vorzugsweise < 0 °C, besonders bevorzugt < -20 °C aufweisen. Bevorzugt gehören hierzu Elastomere mit einer Blockcopolymerstruktur sowie weiterhin thermoplastisch aufschmelzbare Elastomere, insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Als Komponente E) einzusetzende **Gleit- und/oder Entformungsmittel** sind bevorzugt langkettige Fettsäuren, insbesondere Stearinsäure oder Behensäure, deren Salze, insbesondere Ca- oder Zn-Stearat, sowie deren Esterderivate, insbesondere solche auf Basis von Pentaerythritol, insbesondere Fettsäureester des Pentaerythritols oder Amidderivate, insbesondere Ethylen-bis-stearylamid, Montanwachse sowie niedermolekulare Polyethylen- bzw. Polypropylenwachse.

Montanwachse im Sinne der vorliegenden Erfindung sind Mischungen aus geradkettigen, gesättigten Carbonsäuren mit Kettenlängen im Bereich von 28 bis 32 C-Atomen.

Erfindungsgemäß werden besonders bevorzugt Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen oder Amide von Aminen mit 2 bis 40 C-Atomen mit ungesättigten aliphatischen Carbonsäuren mit 8 bis 40 C-Atomen bzw. statt jeweils der Carbonsäuren Metallsalze gesättigter oder ungesättigter aliphatischer Carbonsäuren mit 8 bis 40 C-Atomen eingesetzt.

Ganz besonders bevorzugt als Komponente E) einzusetzende Gleit- und/oder Entformungsmittel sind auszuwählen aus der Gruppe Pentaerythritoltetrastearat [CAS Nr. 115-83-3], Ethylen-bis-stearylamid, Calciumstearat und Ethylenglycoldimontanat. Insbesondere bevorzugt wird Calciumstearat [CAS Nr. 1592-23-0] oder Ethylen-bis-stearylamid [CAS Nr. 110-30-5] eingesetzt. Insbesondere besonders bevorzugt wird Ethylen-bis-stearylamid (Loxiol® EBS von Emery Oleochemicals) eingesetzt.

Als Komponente E) bevorzugt einzusetzende **Hydrolysestabilisatoren bzw. Komponenten zur Verringerung der Wasseraufnahme** sind bevorzugt Polyester, wobei Polybutylenterepthalat und/oder Polyethylenterephthalat bevorzugt sind und Polyethylenterephthalat ganz besonders bevorzugt ist. Die Polyester werden dabei bevorzugt in Konzentrationen von 5 bis 20 Gew.-% und besonders bevorzugt in Konzentrationen von 7 bis 15 Gew-% eingesetzt, jeweils bezogen auf die gesamte Polymerzusammensetzung und mit der Maßgabe, dass die Summe aller Gewichtsprozente der Polymerzusammensetzung stets 100 Gew.-% ergibt.

Als Komponente E) bevorzugt einzusetzende **Laserabsorber** werden ausgewählt aus der Gruppe Zinnoxid, Zinnorthophosphat, Bariumtitanat, Aluminiumoxid, Kupferhydroxyphosphat, Kupferorthophosphat, Kaliumkupferdiphosphat, Kupferhydroxid, Bismuttrioxid und Antrachinon. Besonders bevorzugt ist Zinnoxid.

In einer alternativen Ausführungsform kann als Laserabsorber aber auch - sofern der Bedarf es erfordert unter Berücksichtigung der anfangs beschriebenen Nachteile hinsichtlich der Gefahrenklassifizierung H351 - auch Antimonzinnoxid, Antimontrioxid oder Antimonpentoxid eingesetzt werden.

Der Laserabsorber kann direkt als Pulver oder in Form von Masterbatchen eingesetzt werden. Bevorzugte Masterbatche sind solche auf Basis von Polyamid und/oder Polyolefinen, bevorzugt Polyethylen. Ganz besonders bevorzugt wird der Laserabsorber in Form eines Polyamid 6-basierten Masterbatches eingesetzt.

Der Laserabsorber kann einzeln oder als Gemisch mehrerer Laserabsorber eingesetzt werden.

Laserabsorber können Laserlicht einer bestimmten Wellenlänge absorbieren. In der Praxis liegt diese Wellenlänge im Bereich von 157 nm bis 10,6 $\mu$m. Beispiele für Laser dieser Wellenlängen sind in WO2009/003976 A1 beschrieben. Bevorzugt werden Nd:YAG Laser, mit denen Wellenlängen von 1064, 532, 355 und 266 nm realisiert werden können, und $CO_2$-Laser eingesetzt.

Erfindungsgemäß bevorzugt sind Hochvoltkomponenten, insbesondere Hochvoltkomponenten für die Elektromobilität, basierend auf Polymerzusammensetzungen enthaltend

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid, und

C) 1 bis 150 Massenanteile wenigstens eines Füllstoffs oder Verstärkungsstoffs auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,

mit der Maßgabe eines ΔE <30 zu den L*a*b* Koordinaten einer mit "2" beginnenden Farbnummer der RAL-Farbtabelle.

Erfindungsgemäß bevorzugt sind Hochvoltkomponenten, insbesondere Hochvoltkomponenten für die Elektromobilität, basierend auf Polymerzusammensetzungen enthaltend

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid, und

E) 0,01 bis 2 Massenanteile wenigstens Titandioxid,

mit der Maßgabe eines ΔE <30 zu den L*a*b* Koordinaten einer mit "2" beginnenden Farbnummer der RAL-Farbtabelle.

Erfindungsgemäß bevorzugt sind Hochvoltkomponenten, insbesondere Hochvoltkomponenten für die Elektromobilität, basierend auf Polymerzusammensetzungen enthaltend

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid, und

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln,

mit der Maßgabe eines ΔE <30 zu den L*a*b* Koordinaten einer mit "2" beginnenden Farbnummer der RAL-Farbtabelle.

Erfindungsgemäß bevorzugt sind Hochvoltkomponenten, insbesondere Hochvoltkomponenten für die Elektromobilität, basierend auf Polymerzusammensetzungen enthaltend

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid, und

E') 0,01 bis 2 Massenanteile Titandioxid,

mit der Maßgabe eines ΔE <30 zu den L*a*b* Koordinaten einer mit "2" beginnenden Farbnummer der RAL-Farbtabelle.

Erfindungsgemäß bevorzugt sind Hochvoltkomponenten, insbesondere Hochvoltkomponenten für die Elektromobilität, basierend auf Polymerzusammensetzungen enthaltend

A) auf 100 Massenanteile wenigstens eines Polyamids, vorzugsweise Polyamid 6 oder Polyamid 66, insbesondere

Polyamid 6,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füllstoffstoffs oder Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln,

mit der Maßgabe eines ΔE <30 zu den L*a*b* Koordinaten einer mit "2" beginnenden Farbnummer der RAL-Farbtabelle.

Erfindungsgemäß bevorzugt sind Hochvoltkomponenten, insbesondere Hochvoltkomponenten für die Elektromobilität, basierend auf Polymerzusammensetzungen enthaltend

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und

E') 0,01 bis 2 Massenanteile Titandioxid,

mit der Maßgabe eines ΔE <30 zu den L*a*b* Koordinaten einer mit "2" beginnenden Farbnummer der RAL-Farbtabelle.

Erfindungsgemäß bevorzugt sind Hochvoltkomponenten, insbesondere Hochvoltkomponenten für die Elektromobilität, basierend auf Polymerzusammensetzungen enthaltend

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2-tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester,

mit der Maßgabe eines ΔE <30 zu den L*a*b* Koordinaten einer mit "2" beginnenden Farbnummer der RAL-Farbtabelle.

Erfindungsgemäß bevorzugt sind Hochvoltkomponenten, insbesondere Hochvoltkomponenten für die Elektromobilität, basierend auf Polymerzusammensetzungen enthaltend

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und

E') 0,01 bis 2 Massenanteile Titandioxid,

mit der Maßgabe eines $\Delta E < 30$ zu den L*a*b* Koordinaten einer mit "2" beginnenden Farbnummer der RAL-Farbtabelle.

Erfindungsgemäß bevorzugt sind Hochvoltkomponenten, insbesondere Hochvoltkomponenten für die Elektromobilität, basierend auf Polymerzusammensetzungen enthaltend

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2-tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester,

mit der Maßgabe eines $\Delta E < 30$ zu den L*a*b* Koordinaten einer mit "2" beginnenden Farbnummer der RAL-Farbtabelle.

Erfindungsgemäß bevorzugt sind Hochvoltkomponenten, insbesondere Hochvoltkomponenten für die Elektromobilität, basierend auf Polymerzusammensetzungen enthaltend

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester,

mit der Maßgabe eines ΔE <30 zu den L*a*b* Koordinaten einer mit "2" beginnenden Farbnummer der RAL-Farbtabelle.

Erfindungsgemäß bevorzugt sind Hochvoltkomponenten, insbesondere Hochvoltkomponenten für die Elektromobilität, basierend auf Polymerzusammensetzungen enthaltend

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und

E) 0,01 bis 2 Massenanteile Titandioxid,

mit der Maßgabe eines ΔE <30 zu den L*a*b* Koordinaten einer mit "2" beginnenden Farbnummer der RAL-Farbtabelle.

Erfindungsgemäß bevorzugt sind Hochvoltkomponenten, insbesondere Hochvoltkomponenten für die Elektromobilität, basierend auf Polymerzusammensetzungen enthaltend

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln,

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester, und

E') 0,01 bis 2 Massenanteile Titandioxid,

mit der Maßgabe eines ΔE <30 zu den L*a*b* Koordinaten einer mit "2" beginnenden Farbnummer der RAL-Farbtabelle.

Zur Klarstellung sei angemerkt, dass vom Rahmen der vorliegenden Erfindung alle zu den Komponenten A) bis E) aufgeführten allgemeinen oder in Vorzugsbereichen genannten Definitionen, Mengenangaben und Parameter in beliebigen Kombinationen von den erfindungsgemäßen Hochvoltkomponenten bzw. Hochvoltkomponenten für die Elektromobilität umfasst sind.

**Verfahren**

Die vorliegende Erfindung betrifft zudem ein Verfahren zur Herstellung von Hochvoltkomponenten, insbesondere von Hochvoltkomponenten für die Elektromobilität, worin man

A) auf 100 Massenanteile wenigstens eines Polyamids, vorzugsweise Polyamid 6 oder Polyamid 66, insbesondere Polyamid 6, und

B) 0,01 bis 5 Massenanteile wenigstens eines Pigmentsystems auf Basis anorganischer Mischoxide enthaltend Titandioxid, Zinnoxid und Zinkoxid zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines $\Delta E$ <30 zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid, und

C) 1 bis 150 Massenanteile wenigstens eines Füllstoffs oder Verstärkungsstoffs auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,

zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines $\Delta E$ <30 zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid, und

E') 0,01 bis 2 Massenanteile wenigstens Titandioxid,

zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines $\Delta E$ <30 zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid, und

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln,

zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines $\Delta E$ <30 zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid, und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester,

zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines $\Delta E$ <30 zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füllstoffstoffs oder Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und

zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines ΔE <30 zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und

E') 0,01 bis 2 Massenanteile Titandioxid,

zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines ΔE <30 zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyamids, vorzugsweise Polyamid 6 oder Polyamid 66, insbesondere Polyamid 6,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester,

zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines ΔE <30 zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyamids, vorzugsweise Polyamid 6 oder Polyamid 66, insbesondere Polyamid 6,

## Patentansprüche

1. Verwendung eines Pigmentsystems auf Basis anorganischer Mischoxide enthaltend Titandioxid, Zinnoxid und Zinkoxid als Laserbeschriftungsadditiv Polyamid basierter Hochvoltkomponenten, **dadurch gekennzeichnet, dass** man auf 100 Massenanteile wenigstens eines Polyamids 0,01 bis 5 Massenanteile des Pigmentsystems einsetzt, mit der Maßgabe eines $\Delta E$ <30 zu den L*a*b* Koordinaten einer mit "2" beginnenden Farbnummer der RAL-Farbtabelle.

2. Verwendung gemäß Anspruch 1, **dadurch gekennzeichnet, dass** als Polyamid Polyamid 6 oder Polyamid 66 eingesetzt wird.

3. Verwendung gemäß Anspruch 1 oder 2, **dadurch gekennzeichnet, dass** es sich bei den Polyamid basierten Hochvoltkomponenten um Polyamid basierte Hochvoltkomponenten für die Elektromobilität handelt.

4. Verwendung gemäß einem oder mehreren der Ansprüche 1 bis 3, **dadurch gekennzeichnet, dass** für das Laserbeschriftungsadditiv ein Festkörperlaser mit Nd:YAG Kristall bei einer Wellenlänge von 1064nm eingesetzt wird.

5. Verwendung gemäß einem oder mehreren der Ansprüche 1 bis 4, **dadurch gekennzeichnet, dass** ein Pigmentsystem enthaltend Titandioxid, Zinnoxid und Zinkoxid der CAS-Nr. 923954-49-8 eingesetzt wird.

6. Verwendung gemäß einem oder mehreren der Ansprüche 1 bis 5, **dadurch gekennzeichnet, dass** als Pigmentsystem C.I. Pigment Orange 82 der CAS-Nr. 2170864-77-2 oder C.I.Pigment Yellow 216 der CAS-Nr. 817181-98-9 eingesetzt wird.

7. Verwendung gemäß einem oder mehreren der Ansprüche 1 bis 6, **dadurch gekennzeichnet, dass** im Pigmentsystem zusätzlich
C) 1 bis 150 Massenanteile wenigstens eines Füllstoffs oder Verstärkungsstoffs auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1%, amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, eingesetzt werden.

8. Verwendung gemäß Anspruch 7, **dadurch gekennzeichnet, dass** im Pigmentsystem zusätzlich zu den Komponenten A) Polymer, B) Mischoxid und C) oder anstelle von C) noch
D) wenigstens ein Flammschutzmittel zu 3 bis 100 Massenanteilen eingesetzt wird.

9. Verwendung gemäß Anspruch 7, **dadurch gekennzeichnet, dass** die Flammschutzmittel D) auszuwählen sind aus mineralischen Flammschutzmitteln, stickstoffhaltigen Flammschutzmitteln oder phosphorhaltigen Flammschutzmitteln.

10. Verwendung gemäß einem oder mehreren der Ansprüche 1 bis 6, **dadurch gekennzeichnet, dass** im Pigmentsystem zusätzlich
E) 0,01 bis 2 Massenanteile wenigstens eines Thermostabilisators eingesetzt werden.

11. Verwendung gemäß Anspruch 10, **dadurch gekennzeichnet, dass** die Thermostabilisatoren E) auszuwählen sind aus der Gruppe der sterisch gehinderten Phenole, insbesondere solche enthaltend mindestens eine 2,6 Ditert.-butylphenylgruppe und/oder 2-tert.-Butyl-6-methylphenyl-Gruppe, ferner der Phosphite, der Hypophosphite, insbesondere Natriumhypophosphit $NaH2PO2$, der Hydrochinone, der aromatischen sekundären Amine und der 3,3'-Thiodipropionsäureester.

12. Verwendung gemäß Anspruch 10, **dadurch gekennzeichnet, dass** wenigstens E') 0,01 bis 2 Massenanteile Titandioxid eingesetzt werden.

## Claims

1. Use of a pigment system based on inorganic mixed oxides containing titanium dioxide, tin oxide and zinc oxide as laser marking additive of polyamide-based high-voltage components, **characterized in that** 0.01 to 5 parts by mass of the

pigment system are used per 100 parts by mass of at least one polyamide, with the proviso of a ΔE < 30 with respect to the L*a*b* coordinates of a colour number beginning with "2" in the RAL colour chart.

2. Use according to Claim 1, **characterized in that** the polyamide used is nylon-6 or nylon-6,6.

3. Use according to Claim 1 or 2, **characterized in that** the polyamide-based high-voltage components are polyamide-based high-voltage components for electromobility.

4. Use according to one or more of Claims 1 to 3, **characterized in that** a solid- state laser with Nd:YAG crystal at a wavelength of 1064 nm is used for the laser marking additive.

5. Use according to one or more of Claims 1 to 4, **characterized in that** a pigment system comprising titanium dioxide, tin oxide and zinc oxide of CAS No. 923954-49-8 is used.

6. Use according to one or more of Claims 1 to 5, **characterized in that** the pigment system used is C.I. Pigment Orange 82 of CAS No. 2170864-77-2 or C.I. Pigment Yellow 216 of CAS No. 817181-98-9.

7. Use according to one or more of Claims 1 to 6, **characterized in that** the pigment system additionally includes C) 1 to 150 parts by mass of at least one filler or reinforcer to be selected from the group of glass beads or solid or hollow glass beads, or glass fibres, or ground glass, amorphous quartz glass, aluminium borosilicate glass having an alkali content of 1%, amorphous silica, quartz flour, calcium silicate, calcium metasilicate, magnesium carbonate, kaolin, calcined kaolin, chalk, kyanite, powdered or ground quartz, mica, phlogopite, barium sulfate, feldspar, wollastonite, montmorillonite, pseudoboehmite of the formula AlO(OH), magnesium carbonate and talc, especially glass fibres.

8. Use according to Claim 7, **characterized in that** the pigment system includes, in addition to components A) polymer, B) mixed oxide and C), or instead of C), also D) at least one flame retardant in an amount of 3 to 100 parts by mass.

9. Use according to Claim 7, **characterized in that** the flame retardants D) should be selected from mineral flame retardants, nitrogen-containing flame retardants and phosphorus-containing flame retardants.

10. Use according to one or more of Claims 1 to 6, **characterized in that** the pigment system additionally includes E) 0.01 to 2 parts by mass of at least one thermal stabilizer.

11. Use according to Claim 10, **characterized in that** the thermal stabilizers E) should be selected from the group of sterically hindered phenols, especially those containing at least one 2,6-di-tert-butylphenyl group and/or 2-tert-butyl-6-methylphenyl group, and phosphites, hypophosphites, especially sodium hypophosphite $NaH2PO2$, hydroquinones, aromatic secondary amines and 3,3'-thiodipropionates.

12. Use according to Claim 10, **characterized in that** at least E') 0.01 to 2 parts by mass of titanium dioxide is used.

**Revendications**

1. Utilisation d'un système pigmentaire à base d'oxydes mixtes inorganiques contenant du dioxyde de titane, de l'oxyde d'étain et de l'oxyde de zinc en tant qu'additif de marquage laser de composants haute tension à base de polyamide, **caractérisée en ce qu'**on utilise, pour 100 parties en masse d'au moins un polyamide, 0,01 à 5 parties en masse du système pigmentaire, à condition qu'un ΔE < 30 par rapport aux coordonnées L*a*b* d'un numéro de couleur commençant par « 2 » du nuancier RAL.

2. Utilisation selon la revendication 1, **caractérisée en ce qu'**on utilise en tant que polyamide du polyamide 6 ou du polyamide 66.

3. Utilisation selon la revendication 1 ou 2, **caractérisée en ce que** les composants haute tension à base de polyamide sont des composants haute tension à base de polyamide pour la mobilité électrique.

4. Utilisation selon une ou plusieurs des revendications 1 à 3, **caractérisée en ce qu'**un laser à solide avec cristal Nd:YAG à une longueur d'onde de 1064 nm est utilisé pour l'additif de marquage laser.

5. Utilisation selon une ou plusieurs des revendications 1 à 4, **caractérisée en ce qu'**un système pigmentaire contenant du dioxyde de titane, de l'oxyde d'étain et de l'oxyde de zinc de numéro CAS 923954-49-8 est utilisé.

6. Utilisation selon une ou plusieurs des revendications 1 à 5, **caractérisée en ce que** le système pigmentaire utilisé est C.I. Pigment Orange 82 de numéro CAS 2170864-77-2, ou C.I. Pigment Yellow 216 de numéro CAS 817181-98-9.

7. Utilisation selon une ou plusieurs des revendications 1 à 6, **caractérisée en ce qu'**on utilise en outre dans le système pigmentaire
C) 1 à 150 parties en masse d'au moins une charge ou matière renforçante choisie dans le groupe des billes de verre ou des billes de verre pleines ou creuses, ou des fibres de verre, ou du verre broyé, du verre de quartz amorphe, du verre d'aluminium-borosilicate ayant une teneur en alcalis de 1 %, de l'acide silicique amorphe, de la poudre de quartz, du silicate de calcium, du métasilicate de calcium, du carbonate de magnésium, du kaolin, du kaolin calciné, de la craie, du cyanite, du quartz pulvérisé ou broyé, du mica, de la phlogopite, du sulfate de baryum, du feldspath, de la wollastonite, de la montmorillonite, de la pseudobohémite de formule AlO(OH), du carbonate de magnésium et du talc, notamment des fibres de verre.

8. Utilisation selon la revendication 7, **caractérisée en ce qu'**on utilise, dans le système pigmentaire, en plus des composants A) polymère, B) oxyde mixte et C) ou à la place de C), encore
D) au moins un agent ignifuge à raison de 3 à 100 parties en masse.

9. Utilisation selon la revendication 7, **caractérisée en ce que** les agents ignifuges D) sont à choisir parmi les agents ignifuges minéraux, les agents ignifuges azotés ou les agents ignifuges phosphorés.

10. Utilisation selon une ou plusieurs des revendications 1 à 6, **caractérisée en ce qu'**on utilise en outre dans le système pigmentaire
E) 0,01 à 2 parties en masse d'au moins un thermostabilisateur.

11. Utilisation selon la revendication 10, **caractérisée en ce que** les thermostabilisants E) sont à choisir dans le groupe des phénols à encombrement stérique, notamment ceux contenant au moins un groupe 2,6-di-tert-butylphényle et/ou 2-tert-butyl-6-méthylphényle, ainsi que des phosphites, des hypophosphites, notamment de l'hypophosphite de sodium NaH2PO2, des hydroquinones, des amines secondaires aromatiques et des esters de l'acide 3,3'-thiodipropionique.

12. Utilisation selon la revendication 10, **caractérisée en ce qu'**au moins E') 0,01 à 2 parties en masse de dioxyde de titane sont utilisées.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0041274 B1
- EP 3281974 A1
- EP 0113229 A1
- KR 101977321 B1
- EP 0113229 B1
- DE 4236122 A
- WO 2013083247 A1
- DE 2035390 A
- DE 2248242 A
- US 4937285 A
- DE 3704657 A
- DE 3704655 A
- DE 3631540 A
- DE 3631539 A
- WO 2009003976 A1

### In der Beschreibung aufgeführte Nicht-Patentliteratur

- *CHEMICAL ABSTRACTS*, 6925-69-5
- *A New Class of Weather-Fast Pigments*, 01 April 2025, https://www.pcimag.com/articles/83054-a-new-class-of-weather-fast-pigments
- New Colour Index for BASF orange pigment. ADDITIVES FOR POLYMERS. Elsevier Advanced Technology, 01 April 2009, 3-4
- *CHEMICAL ABSTRACTS*, 25038-54-4
- *CHEMICAL ABSTRACTS*, 32131-17-2
- *CHEMICAL ABSTRACTS*, 923954-49-8
- *CHEMICAL ABSTRACTS*, 2170864-77-2
- *CHEMICAL ABSTRACTS*, 817181-98-9
- *CHEMICAL ABSTRACTS*, 7440-44-0
- *CHEMICAL ABSTRACTS*, 65997-17-3
- *CHEMICAL ABSTRACTS*, 7631-86-9
- *CHEMICAL ABSTRACTS*, 14808-60-7
- *CHEMICAL ABSTRACTS*, 1344-95-2
- *CHEMICAL ABSTRACTS*, 10101-39-0
- *CHEMICAL ABSTRACTS*, 546-93-0
- *CHEMICAL ABSTRACTS*, 1332-58-7
- *CHEMICAL ABSTRACTS*, 92704-41-1
- *CHEMICAL ABSTRACTS*, 1317-65-3
- *CHEMICAL ABSTRACTS*, 1302-76-7
- *CHEMICAL ABSTRACTS*, 1318-94-1
- *CHEMICAL ABSTRACTS*, 12251-00-2
- *CHEMICAL ABSTRACTS*, 7727-43-7
- *CHEMICAL ABSTRACTS*, 68476-25-5
- *CHEMICAL ABSTRACTS*, 13983-17-0
- *CHEMICAL ABSTRACTS*, 67479-91-8
- *CHEMICAL ABSTRACTS*, 12125-28-9
- *CHEMICAL ABSTRACTS*, 14807-96-6
- Chemie Ingenieur Technik. Wiley-VCH Verlags GmbH, 2000, vol. 72, 273-276
- *CHEMICAL ABSTRACTS*, 1309-42-8
- *CHEMICAL ABSTRACTS*, 1078142-02-5
- *CHEMICAL ABSTRACTS*, 225789-38-8
- *CHEMICAL ABSTRACTS*, 71449-76-8
- *CHEMICAL ABSTRACTS*, 156024-71-4
- *CHEMICAL ABSTRACTS*, 7681-65-4
- *CHEMICAL ABSTRACTS*, 47107-74-4
- *CHEMICAL ABSTRACTS*, 7681-11-0
- *CHEMICAL ABSTRACTS*, 14059-33-7
- *CHEMICAL ABSTRACTS*, 1309-37-1
- *CHEMICAL ABSTRACTS*, 13463-67-7
- *CHEMICAL ABSTRACTS*, 1317-70-0
- *CHEMICAL ABSTRACTS*, 1314-98-3
- *CHEMICAL ABSTRACTS*, 12014-93-6
- *CHEMICAL ABSTRACTS*, 12031-49-1
- *CHEMICAL ABSTRACTS*, 42844-93-9
- *CHEMICAL ABSTRACTS*, 72102-84-2
- *CHEMICAL ABSTRACTS*, 56279-27-7
- *CHEMICAL ABSTRACTS*, 13676-91-0
- *CHEMICAL ABSTRACTS*, 98460-24-3
- *CHEMICAL ABSTRACTS*, 8013-07-8
- **ULLMANN**. *Enzyklopädie der Technischen Chemie*, 1980, vol. 19, 277-295
- *CHEMICAL ABSTRACTS*, 115-83-3
- *CHEMICAL ABSTRACTS*, 1592-23-0
- *CHEMICAL ABSTRACTS*, 110-30-5